# EUROPÄISCHE PATENTSCHRIFT

(11) **EP 4 071 395 B1**
(45) Veröffentlichungstag und Bekanntmachung des Hinweises auf die Patenterteilung: **24.05.2023**
(21) Anmeldenummer: 22166301.6
(22) Anmeldetag: 01.04.2022
(51) Int. Cl.: F16L 37/098

(54) **STECKVERBINDER FÜR FLUIDLEITUNGEN MIT INNENLIEGENDER ADAPTERHÜLSE**
CONNECTOR FOR FLUID CONDUITS WITH INTERNAL ADAPTER SLEEVE
CONNECTEUR ENFICHABLE POUR CONDUITES DE FLUIDE POURVU DE MANCHON ADAPTATEUR INTERNE

(30) Priorität: 01.04.2021 DE 102021108451
(43) Veröffentlichungstag der Anmeldung: 12.10.2022
(73) Patentinhaber: Voss Automotive GmbH, 51688 Wipperfürth (DE)
(72) Erfinder: HEINRICHS, Herr Eugen, 51702 Bergneustadt (DE); GMEINER, Herr Swen, 51375 Leverkusen (DE)
(74) Vertreter: Dr. Solf & Zapf Patent- und Rechtsanwalts PartG mbB

(56) Entgegenhaltungen:
- WO-A1-2014/019757
- WO-A1-2015/180875

## Beschreibung

Die vorliegende Erfindung betrifft einen Steckverbinder gemäß dem Oberbegriff des Anspruchs 1. Weiterhin betrifft die Erfindung einen Steckverbinder gemäß dem Oberbegriff des Anspruchs 4.

Ein derartiger Steckverbinder ist aus der WO 2015/180875 A1 bekannt.

Bei dem Transport des vormontierten Steckverbinders und seiner Endmontage hat es sich ergeben, dass sich die Lösesicherung aus ihrer ersten Raststellung auf dem Muffenteil lösen kann, so dass sie sich entgegen der Einsteckrichtung verschiebt und hierdurch das Einstecken des Gegensteckverbinders derart blockieren kann, dass ein Stecken nur mit hohen Kräften möglich ist, und der Verbinder dabei gegebenenfalls beschädigt werden kann.

Ausgehend von diesem bekannten Steckverbinder gemäß der eingangs beschriebenen Art liegt der Erfindung die Aufgabe zu Grunde, ein ungewolltes Lösen der Lösesicherung aus ihrer ersten Raststellung zu verhindern, aber gleichzeitig eine Freigabe für die Verschiebung in die zweite Raststellung sicherzustellen.

Erfindungsgemäß wird diese Aufgabe durch die Merkmale des Anspruchs 1 gelöst. Hierbei weist die Hülse der Lösesicherung an ihrem entgegen der Einsteckrichtung weisenden Rand hakenförmige Rastfortsätze auf, die in der ersten Raststellung der Lösesicherung in die jeweiligen Rastausnehmungen in der Umfangswand des Muffenabschnitts eingreifen und entgegen der Einsteckrichtung formschlüssig in diesen fixiert sind, sowie die zweiten Rastnocken der Formschlusselemente derart einen in Richtung auf die Längsachse X-X weisenden Betätigungsansatz aufweisen, dass bedingt durch das Einstecken des Gegensteckverbinders in die Adapterhülse die zweiten Rastnocken um ein Verschiebemaß d innerhalb der jeweiligen Rastausnehmung derart verschoben werden, dass die zweiten Rastnocken in der Öffnungsebene einer außenseitigen Öffnung der jeweiligen Rastausnehmung enden, wodurch der in der jeweiligen Rastausnehmung befindliche hakenförmige Rastfortsatz aus seiner formschlüssigen Raststellung gelöst wird.

Erfindungsgemäß ist es von Vorteil, wenn die hakenförmigen Rastfortsätze jeweils um 90 ° gegenüber den Rastzungen der Lösesicherung angeordnet sind und zueinander diametral gegenüberliegen.

Weiterhin ist es erfindungsgemäß von Vorteil, wenn die Wandung der Hülse der Lösesicherung im Bereich der hakenförmigen Rastfortsätze eine derartige Höhe besitzt, dass in der zweiten Raststellung der Lösesicherung die hakenförmigen freien Enden der Rastfortsätze in einem Spalt zwischen dem Ringkragen und dem Muffenteil eingreifen. Somit befinden sich die hakenförmigen Rastfortsätze sowohl in der Montagestellung, wenn sie in die Rastausnehmungen eingreifen, als auch in ihrer zweiten Raststellung, wenn die Rastfortsätze in einen Spalt zwischen dem Ringkragen und dem Muffenteil eingreifen, in einem entspannten Zustand, und somit sind sie keiner dauerhaften Belastung ausgesetzt und einer damit einhergehenden Relaxation durch Alterung.

Weiterhin wird die der Erfindung zugrunde gelegte Aufgabe durch einen Steckverbinder mit den Merkmalen des Anspruchs 4 gelöst. Erfindungsgemäß weist dabei die Hülse der Lösesicherung an ihrem in Einsteckrichtung weisenden Umfangsrand ein geschlossenes Ringprofil auf. Die Hülse weist zudem an ihrem entgegen der Einsteckrichtung weisenden Rand hakenförmige Rastfortsätze auf. Erfindungsgemäß besitzt die Wandung der Hülse der Lösesicherung im Bereich der hakenförmigen Rastfortsätze eine derartige Höhe, dass in der zweiten Raststellung der Lösesicherung die hakenförmigen freien Enden der Rastfortsätze in einem Spalt zwischen dem Ringkragen und dem Muffenteil eingreifen. Ebenfalls ist es vorgesehen, dass in der ersten Raststellung der Lösesicherung selbige in die jeweiligen Rastausnehmungen eingreifen und entgegen der Einsteckrichtung formschlüssig fixiert sind. Die zweiten Rastnocken der Formschlusselemente weisen gemäß der Erfindung derart einen in Richtung auf die Längsachse X-X weisenden Betätigungsansatz auf, dass bedingt durch das Einstecken des Gegensteckverbinders in die Adapterhülse die zweiten Rastnocken um ein Verschiebemaß innerhalb der jeweiligen Rastausnehmung derart verschiebbar sind, dass die zweiten Rastnocken mit ihren freien Enden in der Öffnungsebene einer außenseitigen Öffnung der jeweiligen Rastausnehmung liegen, wodurch der hakenförmige Rastfortsatz aus seiner formschlüssigen Raststellung gelöst wird.

Somit werden bei den erfindungsgemäßen Ausführungen die hakenförmigen Rastfortsätze während des Steckvorgangs des Gegensteckverbinders durch den Gegensteckverbinder nach außen verformt und somit die Lösesicherung freigegeben.

Erfindungsgemäß ist zweckmäßigerweise vorgesehen, dass die Höhe der Betätigungsansätze gleich dem Verschiebemaß d ist und die Betätigungsansätze eine in Richtung auf die Längsachse X-X weisend endseitige Schrägfläche aufweisen, die zur Anlage an dem Gegensteckverbinder beim Einstecken desselben kommt. Hierdurch wird gewährleistet, dass die hakenförmigen Rastfortsätze des Löseelementes sicher aus ihrer Raststellung, bei der ein Formschluss vorliegt, gelöst werden können.

Weiterhin kann es erfindungsgemäß von Vorteil sein, dass Abstütznocken an den radial elastischen Rastfortsätzen entgegen der Einsteckrichtung versetzt gegenüber den Betätigungsansätzen ausgebildet sind, deren in Richtung auf die Wandung des Muffenteils weisende Endfläche von der Wandung mindestens um das Verschiebemaß d entfernt ist. Hierdurch ist gewährleistet, dass die Abstütznocken nicht die gewollte Verschiebung der zweiten Rastnocken in den Rastausnehmungen behindern.

Gemäß der Erfindung ist es zweckmäßig, wenn die Hülse der Lösesicherung in ihrer die Spreizung der Rastarme blockierenden Raststellung, d. h. ihrer zweiten Raststellung, in der sie den Ringkragen der Adapterhülse umschließt, im Muffenabschnitt mittels radial elastischer Formschlusselemente gehalten ist. Hierbei ist es weiterhin von Vorteil, wenn die Hülse der Lösesicherung Einbuchtungen aufweist, die einen Freiraum für die Ausbuchtung des Betätigungsabschnitts des Ringkragens bilden, wobei diese Ausbuchtungen durch das Spreizen der Rastarme beim Einstecken des Steckerschaftes des Steckverbinders auftreten und eine äußere ovale Form einnehmen. Hierdurch kann auch die Lösesicherung nicht mehr entgegen der Einsteckrichtung weiter verschoben werden, weil die Lösesicherung am Ringkragen anschlagen würde. Dies bedeutet, wenn der Steckerschaft so tief eingeschoben ist, dass das Sicherungselement freigegeben wird, es trotzdem erst über den Ringkragen geschoben werden kann, wenn der Steckerschaft vollständig gesteckt und der Ringkragen wieder rund ist, weil die Rastarme in die Rastnut des Steckerschaftes eingerastet sind. Hierdurch wird eine vollwertige Steckindikatorfunktion erreicht, denn die mechanische Verschiebung der Lösesicherung in ihre zweite Raststellung kann nur bei einem korrekt durchgeführten Steckvorgang erfolgen.

Weitere vorteilhafte Ausführungsformen sind in den Unteransprüchen enthalten. Anhand der beiliegenden Zeichnungen wird die Erfindung näher erläutert. Es zeigen:
- Fig. 1: eine perspektivische Explosions-Darstellung einer Steckverbindung aus einem Steckverbinder und einem Gegensteckverbinder mit zwei unterschiedlichen Darstellungen der Lösesicherung,
- Fig. 2: eine Frontansicht auf eine Adapterhülse,
- Fig. 3: eine Seitenansicht, zum Teil geschnitten, einer Adapterhülse gemäß Fig. 2,
- Fig. 4: eine perspektivische Frontalansicht auf die Adapterhülse gemäß Fig. 3,
- Fig. 5: eine Schnittdarstellung gemäß dem Schnitt N-N in Fig. 3,
- Fig. 6: eine Schnittdarstellung gemäß dem Schnitt O-O in Fig. 3,
- Fig. 6a: eine Ansicht auf die Adapterhülse gemäß Fig. 3 entsprechend dem Pfeil A in Fig. 1,
- Fig. 7: einen Längsschnitt durch eine Steckverbindung im eingesteckten Zustand der Adapterhülse und vor dem Einstecken des Gegensteckverbinders,
- Fig. 8: eine Schnittdarstellung im Längsschnitt der Steckverbindung gemäß Fig. 1 während des Einsteckvorgangs des Gegensteckverbinders,
- Fig. 9: eine Ansicht gemäß dem Pfeil B in Fig. 8,
- Fig. 10: einen Längsschnitt durch die Steckverbindung gemäß Fig. 1 im eingesteckten Zustand des Gegensteckverbinders,
- Fig. 11: eine Ansicht gemäß Fig. 10 mit einer in die Sicherungsstellung verschobenen Lösesicherung,
- Fig. 12: eine perspektivische Ansicht einer zweiten Ausführungsform einer Adapterhülse,
- Fig. 13: eine Frontalansicht auf die Adapterhülse gemäß Fig. 12,
- Fig. 14: einen Längsschnitt durch die Steckverbindung im nicht eingesteckten Zustand des Gegensteckverbinders mit einer Adapterhülse gemäß Fig. 12,
- Fig. 14a: eine Ansicht gemäß Fig. 14, jedoch um 90° gedreht,
- Fig. 15: einen Schnitt entsprechend Fig. 14, jedoch mit einem teilweise eingesteckten Gegensteckverbinder,
- Fig. 16: eine Ansicht gemäß dem Pfeil C in Fig. 15,
- Fig. 17: einen Schnitt durch die Steckverbindung gemäß Fig. 14 im eingesteckten Zustand des Gegensteckverbinders,
- Fig. 18: eine Ansicht gemäß dem Pfeil D in Fig. 17,
- Fig. 19: eine Explosionsdarstellung eines erfindungsgemäßen Steckverbinders,
- Fig. 20: einen Längsschnitt durch den erfindungsgemäßen Steckverbinder in seiner Montagestellung gemäß Fig. 19,
- Fig. 21: einen Längsschnitt durch den Steckverbinder gemäß Fig. 20 in einer gegenüber dieser um 90° gedrehten Stellung,
- Fig. 22: einen Längsschnitt durch den erfindungsgemäßen Steckverbinder gemäß Fig. 19 mit teilweise eingestecktem Gegensteckverbinder,
- Fig. 23: eine Ansicht gemäß Fig. 22, jedoch um 90° gedreht, mit vollständig eingestecktem Gegensteckverbinder,
- Fig. 24: eine Ansicht gemäß Fig. 23, jedoch um 90° gedreht,
- Fig. 25: eine perspektivische Explosions-Darstellung einer weiteren Steckverbindung aus einem Steckverbinder und einem Gegensteckverbinder,
- Fig. 26a: eine perspektivische Darstellung einer Lösesicherung gemäß der Steckverbindung gemäß Fig. 25,
- Fig. 26b: einen Längsschnitt durch die Lösesicherung gemäß Fig. 26a,
- Fig. 26c: einen Längsschnitt durch die Lösesicherung gemäß Fig. 26b in einer gegenüber dieser um 90 ° gedrehten Stellung,
- Fig. 27: einen Längsschnitt durch den erfindungsgemäßen Steckverbinder gemäß Fig. 25 in seiner Montagestellung,
- Fig. 28: einen Längsschnitt durch den Steckverbinder gemäß Fig. 27 in einer gegenüber dieser um 90 ° gedrehten Stellung,
- Fig. 29: einen Längsschnitt durch den erfindungsgemäßen Steckverbinder gemäß Fig. 25 mit teilweise eingestecktem Gegensteckverbinder,
- Fig. 30: eine Ansicht gemäß Fig. 29 mit vollständig eingestecktem Gegensteckverbinder und
- Fig. 31: einen Längsschnitt durch den Steckverbinder gemäß Fig. 30 in einer zu Fig. 30 um 90 ° gedrehten Ansicht.

Gleiche Teile sind in den einzelnen Figuren mit denselben Bezugsziffern gekennzeichnet.

Zu der anschließenden Beschreibung wird ausdrücklich beansprucht, dass die Erfindung nicht auf alle oder mehrere Merkmale von beschriebenen Merkmalskombinationen beschränkt ist, vielmehr kann jedes einzelne Teilmerkmal des Ausführungsbeispiels auch losgelöst von allen anderen im Zusammenhang damit beschriebenen Teilmerkmalen für sich und auch in Kombination mit anderen Merkmalen sowie auch unabhängig von den Merkmalskombinationen und Rückbeziehungen der Ansprüche eine erfinderische Bedeutung in Verbindung mit dem Gegenstand des Anspruchs 1 haben.

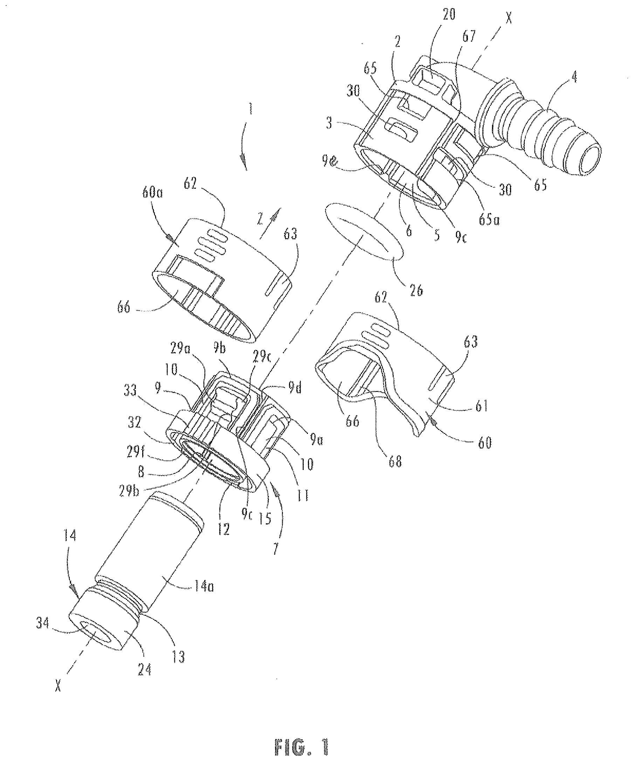

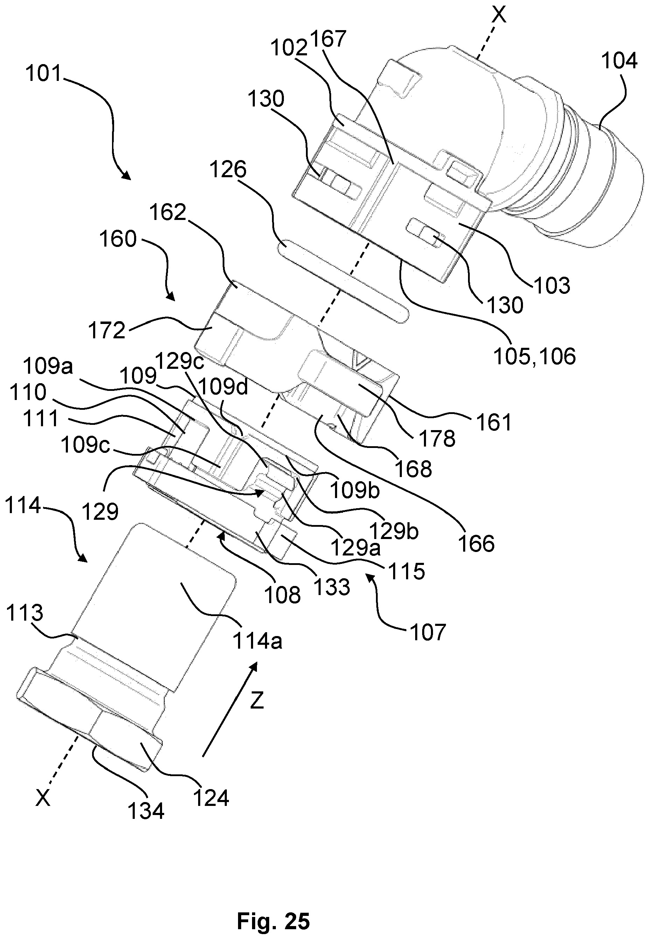

Wie in den Fig. 1 und 25 dargestellt ist, weist ein Steckverbinder 1, 101 ein Gehäuse 2, 102 auf, das an seinem Ende einen Muffenabschnitt 3, 103 besitzt. An seinem anderen Ende besitzt das Gehäuse 2, 102 einen Steckabschnitt 4, 104 z. B. zum Aufstecken einer Fluidleitung oder eines Leitungsverbinders. Dieser Steckabschnitt 4, 104 kann aber auch als Aufnahmeabschnitt zum Einstecken einer Fluidleitung z. B. über eine lösbare Steckverbindung ausgebildet sein. Alternativ kann das Gehäuse 2, 102 auch am anderen Ende an ein Aggregat über eine derartige Steckverbindung angeschlossen werden.

Der Steckverbinder 1, 101 kann als Winkelsteckverbinder, wie in den Fig. 1 und 25dargestellt, ausgebildet sein. Alternativ kann aber auch der Steckverbinder 1, 101 zwischen dem Muffenabschnitt 3, 103 und dem gegenüberliegenden Ende 4, 104 nicht abgewinkelt sein, so dass er grade ausgebildet ist, oder es können beliebige Winkel zwischen den Abschnitten 1, 103 und 4, 104 vorhanden sein. Ebenfalls ist ein T-förmiger oder Y-förmiger Steckverbinder möglich. Der Steckverbinder 1, 101 kann auch Bestandteil eines Verteilergehäuses sein mit zusätzlichen weiteren Anschlüssen für eine Fluidleitung oder für einen Messanschluss oder dergleichen.

Das Gehäuse 2, 102 weist einen Durchgangskanal 5, 105 auf. Der Durchgangskanal 5, 105 besitzt im Bereich des Muffenabschnitts 3, 103 einen im Durchmesser insbesondere vergrößerten Kanalabschnitt 6, 106.

In den Muffenabschnitt 3, 103 mit dem im Durchmesser vergrößerten Kanalabschnitt 6, 106 des Gehäuses 2, 102 wird eine Adapterhülse 7, 107 eingesetzt. Diese Adapterhülse 7, 107 weist eine Durchgangsöffnung 8, 108 auf, siehe Fig. 1, 2 und 25. Weiterhin besitzt die Adapterhülse 7, 107 eine die Durchgangsöffnung 8, 108 umfassende Hülsenwandung 9, 109. Insbesondere in zwei einander diametral gegenüberliegenden Abschnitten sind in der Hülsenwandung 9, 109 Rastmittel ausgebildet. Diese Rastmittel bestehen vorzugsweise aus zwei in Bezug auf eine Längsmittelachse X-X der Adapterhülse 7, 107 radial elastischen ersten Rastarme 10, 110, die um 180 ° zueinander versetzt angeordnet sind. Die ersten Rastarme 10, 110 verlaufen z. B. parallel zur Längsmittelachse X-X und sind durch schlitzförmige Freischnitte 11, 111 an ihren Längsseiten von der Hülsenwandung 9, 109 getrennt. An ihrem in Einsteckrichtung Z vorderen Ende der Adapterhülse 7, 107 sind die ersten Rastarme 10, 110 an die Hülsenwandung 9, 109 angebunden. Hierbei besitzen die ersten Rastarme 10, 110 vorzugsweise eine geringere Dicke als die Wandstärke der Hülsenwandung 9, 109, so dass zwischen dem Außenumfang der Hülsenwandung 9, 109 und den Rastarmen 10, 110 eine in Richtung auf die Längsmittelachse X-X verlaufende Stufenfläche 9a, 109a ausgebildet ist.

Wie in den Fig. 1 und 25 weiterhin zu erkennen ist, kann es zweckmäßig sein, wenn am in Einsteckrichtung Z vorderen Ende der Adapterhülse 7, 107 durch eine Durchmesserreduzierung eine Ringstufe 9b, 109b ausgebildet ist. Ausgehend von dieser Ringstufe 9b, 109b erstrecken sich am Umfang der Adapterhülse 7, 107 parallel zur Längsmittelachse X-X verlaufende Führungsnuten 9c, 109c, deren Nutgrund auf demselben Radius um die Längsmittelachse X-X liegt wie der Umfang der Ringstufe 9b, 109b. Die Führungsnuten 9c, 109c weisen jeweils eine sich trichterförmig in Einsteckrichtung Z erweiternde Einführungsöffnung 9d, 109d auf. Die Führungsnuten 9c, 109c dienen zur Führung von im Innern des Kanalabschnitts 6, 106 an seiner Innenwand ausgebildeten Führungsrippen 9e beim Einstecken der Adapterhülse 7, 107 in den Kanalabschnitt 6, 106, wobei die Adapterhülse 7, 107 derart ausgerichtet wird, dass die Führungsrippen 9e in die Führungsnuten 9c eingeführt werden. Die Führungsrippen sind in Fig. 25 nicht im sichtbaren Bereich. Hierdurch ergibt sich eine lagerichtige Positionierung der Adapterhülse 7, 107 im Kanalabschnitt 6, 106. Vorzugsweise sind vier jeweils um 90° zueinander versetzte Führungsnuten 9c, 109c ausgebildet.

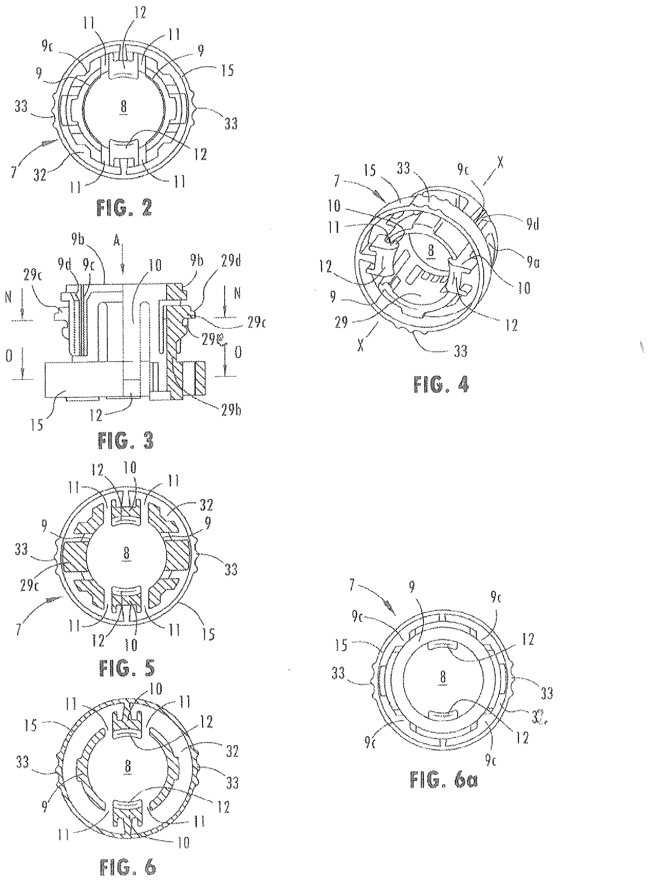

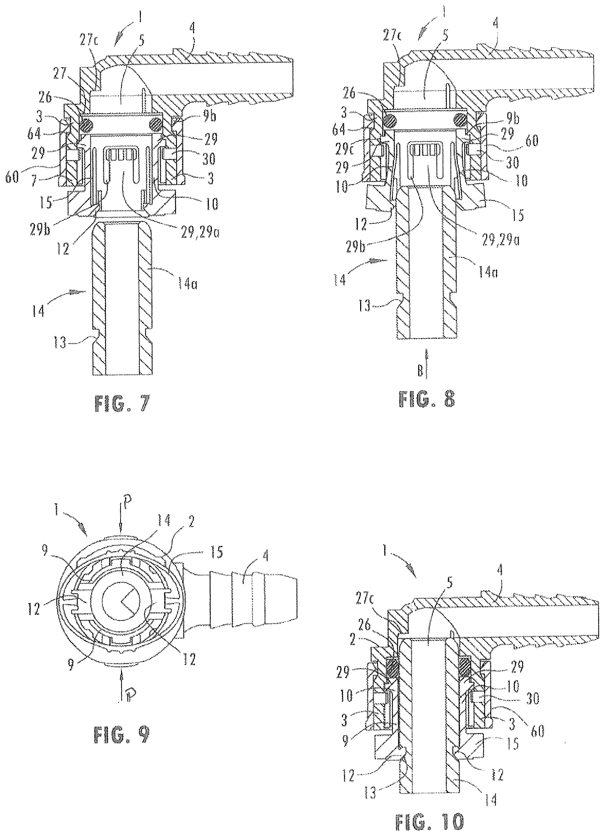

Die ersten Rastarme 10, 110 weisen zum Beispiel an ihren freien Enden radial, in Richtung auf die Längsmittelachse X-X ausgerichtete erste Rastnocken 12, 112 auf. Diese ersten Rastnocken 12, 112 rasten im in die Durchgangsöffnung 8, 108 eingesteckten Zustand der Adapterhülse 7, 107 in eine Rastnut 13, 113 eines eingesteckten Gegensteckverbinders 14, 114 ein, siehe Fig. 10, 17 und 31. Diese ersten Rastnocken 12, 112 liegen außerhalb des Muffenabschnitts 3, 103 im eingesteckten Zustand der Adapterhülse 7, 107 in den Muffenabschnitt 3, 103. Wie z. B. in Fig. 4, 7 zu erkennen ist, besitzt die Durchgangsöffnung 8, 108 über ihre gesamte Länge denselben Innendurchmesser, so dass eine durchgehende glatte, stufenfreie Innenwandung vorhanden ist, diese geht insbesondere in eine Einführungsschrägfläche im Öffnungsbereich der Durchgangsöffnung 8, 108 im in Einsteckrichtung Z hinten liegenden Öffnungsbereich über.

Weiterhin weist die Adapterhülse 7, 107 am Umfang ihrer Durchgangsöffnung 8, 108, d. h. im in Einsteckrichtung Z gesehen hinten liegenden Öffnungsbereich, einen Ringkragen 15, 115 auf. Dieser Ringkragen 15, 115 verläuft radial gegenüber der Hülsenwandung 9, 109 nach außen versetzt, so dass sein Außendurchmesser und sein Innendurchmesser insbesondere größer sind als der Außendurchmesser der Hülsenwandung 9, 109. Der Außendurchmesser des Ringkragens 15, 115 ist gleich groß wie der des Muffenabschnitts 3, 103.

Der Ringkragen 15, 115 ist somit von der Adapterhülse 7, 107 durch umfangsgemäße Spaltabschnitte 32, 132 zwischen den Rastarmen 10, 110 umfangsgemäß getrennt. Im Bereich der ersten Rastnocken 12, 112 der ersten Rastarme 10, 110 ist der Ringkragen 15, 115 mit den Rastarmen 10, 110 an deren Außenseite über Stege verbunden. Demnach umschließt der Ringkragen 15, 115 die Adapterhülse 7, 107 im Bereich der freien Enden der ersten Rastarme 10, 110. Dabei ist es von Vorteil, wenn der Ringkragen 15, 115 mittig zwischen den Rastarmen 10, 110 zwei diametral einander gegenüberliegende Verformungsabschnitte 33, 133 aufweist. Im Bereich dieser Verformungsabschnitte 33, 133 ist der Ringkragen 15, 115 durch eine radial von außen zur Längsmittelachse X-X aufzubringende Kraft P derart radial nach innen verformbar, dass die ersten Rastarme 10, 110 radial nach außen derart gespreizt werden, dass ihre ersten Rastnocken 12, 112 außer Eingriff aus der Rastnut 13, 113 des Steckerschaftes 14a, 114a des eingesteckten Gegensteckverbinders 14, 114 kommen, siehe exemplarisch Fig. 8. Durch diese äußere Kraftausübung auf die Verformungsabschnitte 33, 133 nimmt der Ringragen 15, 115 eine ovale Form ein, siehe beispielsweise Fig. 9. Eine derartige Verformung erfolgt auch beim Einstecken des Steckerschaftes 14a, 114a des Gegensteckverbinders 14, 114. Hierdurch ist eine Lösbarkeit des Gegensteckverbinders 14, 114 aus dem Steckverbinder 1, 101 von Hand möglich. Der Außendurchmesser des Ringkragens 15, 115 ist insbesondere gleich groß wie der Außendurchmesser des Muffenabschnitts 3, 103. Zweckmäßigerweise sind die Verformungsabschnitte 33, 133 durch in Bezug auf die Längsmittelachse X-X radial nach außen gerichtete z. B. rippenartige Ausbuchtungen des Ringkragens 15, 115 gebildet. Es ist zweckmäßig, wenn die ersten Rastnocken 12, 112 einen radialen Abstand zur Längsmittelachse X-X aufweisen, der kleiner ist als ein Innenradius der Durchgangsöffnung 8, 108. Weiterhin ist es von Vorteil, wenn ein radialer Abstand der ersten Rastarme 10, 110 in Bezug auf die Längsmittelachse X-X zumindest in einem an die ersten Rastnocken 12, 112 angrenzenden Bereich gleich dem Innendurchmesser der Durchgangsöffnung 8, 108 ist.

Die Adapterhülse 7, 107 ist innerhalb des Muffenabschnitts 3, 103 mittels Formschlusselementen in axialer und vorzugsweise auch umfangsgemäßer Richtung formschlüssig fixiert. Diese Formschlusselemente bestehen aus am Umfang der Adapterhülse 7, 107 zwischen den Rastarmen 10, 110 ausgebildeten, radial elastischen Rastmitteln 29, 129.

Die Rastmittel 29, 129 werden insbesondere aus zwei axial parallel zur Längsmittelachse X-X verlaufenden, radial elastisch biegbaren Armen 29a, 129a gebildet. Diese Arme 29a, 129a sind jeweils insbesondere um 90 ° zueinander versetzt zu den Rastarmen 10, 110 angeordnet. Die Arme 29a, 129a sind durch einen U-förmigen Schlitz 29b, 129b von der Wand der Adapterhülse 7, 107 getrennt und mit ihrem entgegen der Einsteckrichtung Z weisenden Ende mit der Wand der Adapterhülse 7, 107 einstückig verbunden, siehe Fig. 7, 8 und 27. An ihren freien Enden weisen die Arme 29a, 129a zweite Rastnocken 29c, 129c auf, die radial nach außen abstehen, und die eine in Einsteckrichtung weisende Schrägfläche 29d, 129dbesitzen, sowie eine senkrecht zur Längsmittelachse X-X verlaufende Rastfläche 29e, 129e, die mit der Schrägfläche 29d, 129d an ihrem äußeren freien Ende einen spitzen Winkel einschließt, siehe Fig. 3. Ein Umfangskreis, auf dem die zweiten Rastnocken 29c, 129c mit ihren freien Enden liegen, besitzt einen Durchmesser, der größer ist als der Innendurchmesser des Kanalabschnitts 6, 106 des Muffenabschnitts 3, 103 und kleiner als der Außendurchmesser des Kanalabschnitts 6, 106 ist. Es ist zweckmäßig, wenn im in Einsteckrichtung gesehen hinter dem jeweiligen Rastnocken 29c, 129c ein Versteifungsansatz 29f, 129f angeformt ist. Der Versteifungsansatz ist in Fig. 25 nicht im sichtbaren Bereich. Die Dicke der Arme 29a, 129a ist vorzugsweise kleiner als die Dicke der Wand der Adapterhülse 7, 107. Über die Länge und die Dicke der Arme 29a, 129a kann die Federelastizität der Arme 29a, 129a eingestellt werden.

Die zweiten Rastnocken 29c, 129c korrespondieren mit Rastausnehmungen 30, 130 in der Umfangswand des Muffenabschnitts 3, 103 derart, dass im eingesteckten Zustand der Adapterhülse 7, 107 in den Muffenabschnitt 3, 103 die zweiten Rastnocken 29c, 129c in die Rastausnehmungen 30, 130 formschlüssig einrasten. Die Rastausnehmungen 30, 130 sind als Durchbrüche der Wandung des Muffenabschnitts 3, 103 ausgebildet. Vorzugsweise sind vier jeweils um 90 ° zueinander versetzt angeordnete Rastausnehmungen 30, 130 in dem Muffenabschnitt 3,103 vorhanden. Die zweiten Rastnocken 29c, 129c sind derart dimensioniert, dass ihre freien Enden im eingerasteten Zustand innerhalb der Durchbrüche der Rastausnehmungen 30, 130 liegen. Indem vier um 90 ° zueinander versetzte Rastausnehmungen 30, 130 ausgebildet sind, kann die Adapterhülse 7, 107 in um 90 ° zueinander verdrehte Positionen eingesteckt werden.

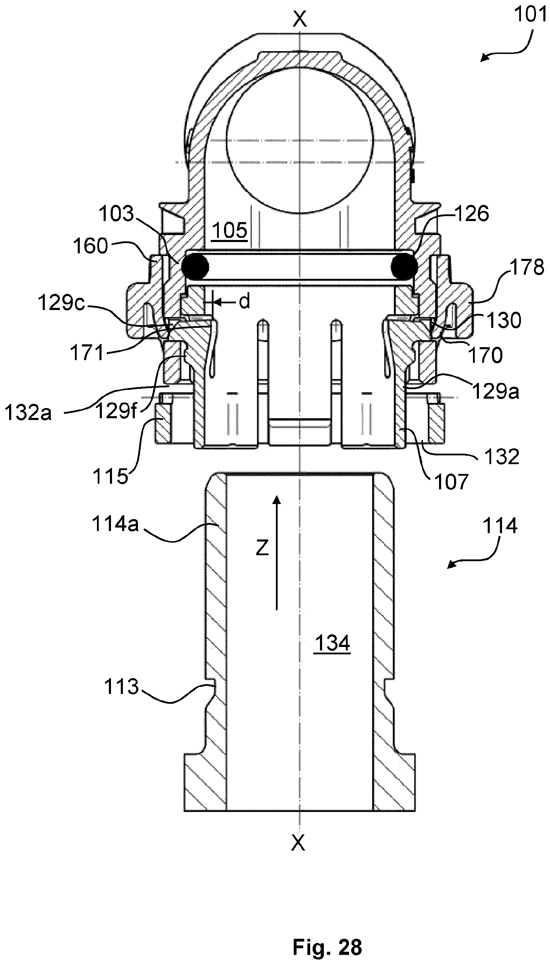

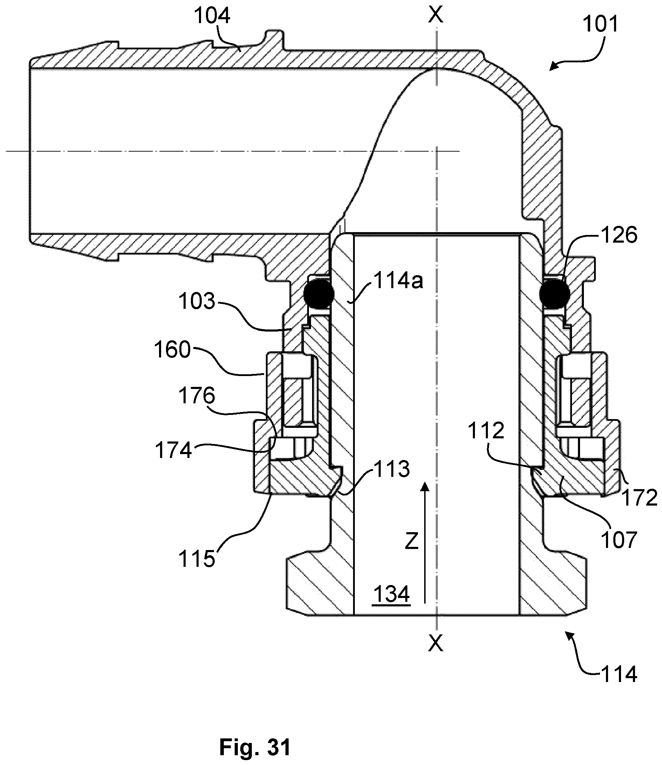

Die Montage der Adapterhülse 7, 107 erfolgt derart, siehe die Fig. 1 und 25, dass zunächst eine Umfangsdichtung 26, 126 in den Muffenabschnitt 3, 103 eingesteckt wird. Danach wird die Adapterhülse 7, 107 in den Muffenabschnitt 3, 103 eingeführt, bis ihre Formschlusselemente 28, 128, d. h. die zweiten Rastnocken 29c, 129, in die Rastausnehmungen 30, 130 eingerastet sind, siehe Fig. 8 und 28. In den derart fertig montierten Steckverbinder wird der Gegensteckverbinder 14, 114 eingesteckt, siehe exemplarisch Fig. 8. Durch das Einstecken des Steckerschaftes 14a, 114a werden die ersten Rastarme 10, 110 gespreizt, siehe beispielhaft Fig. 8, wobei der Ringkragen 15, 115 eine ovale Form einnimmt, siehe exemplarisch Fig. 9, so dass sein Außendurchmesser im Bereich der Betätigungsabschnitte 33, 133 kleiner ist als im Bereich der ersten Rastnocken 12, 112. Der letztere ist dann größer als der Außendurchmesser des Muffenabschnitts 3, 103. Im eingesteckten Zustand des Gegensteckverbinders 14, 114 rasten die ersten Rastnocken 12, 112 der ersten Rastarme 10, 110 in die Rastnut 13, 113 des Gegensteckverbinders 14, 114 formschlüssig ein, siehe die Fig. 10 und 31, wobei der Ringkragen 15, 115 wieder seine ursprüngliche Kreisform einnimmt.

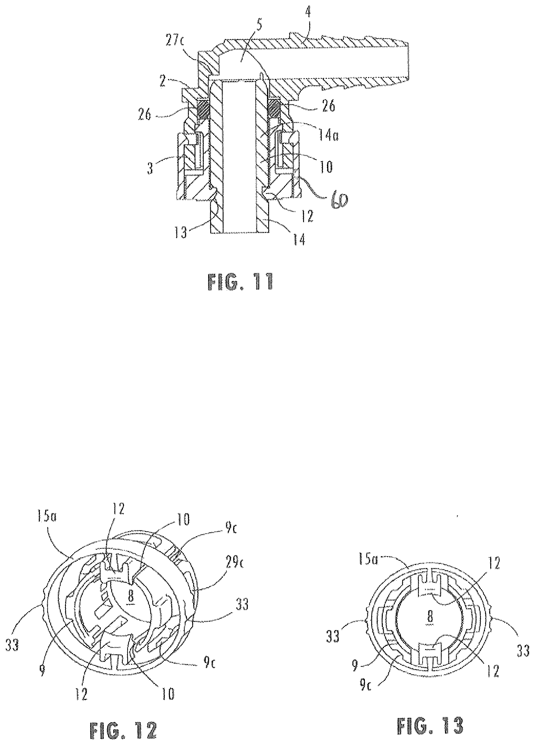

Wie sich aus den Fig. 1 bis 11 und 25 bis 31 ergibt, ist am Außenumfang des Muffenabschnitts 3, 103 eine Lösesicherung 60, 160 in Längsrichtung der Längsachse X-X verschiebbar angeordnet. Diese Lösesicherung 60, 160 ist zwischen zwei Raststellungen verschiebbar gelagert. Die erste Raststellung ist eine Montagestellung, in der der Gegensteckverbinder 14, 114 in den Steckverbinder 1, 101, und zwar in die Adapterhülse 7, 107 eingesteckt werden kann, siehe Fig. 7, 8 und 27. Die zweite Raststellung ist eine Stellung, in der die Lösesicherung 60, 160 in Richtung auf den Ringkragen 15, 115 derart verschoben ist, dass die Lösesicherung 60, 160 eine radiale Spreizung der ersten Rastarme 10, 110 verhindert, siehe Fig. 11 und 31.

Die Lösesicherung 60, 160 besteht aus einer den Muffenabschnitt 3, 103 formschlüssig umfassenden Hülse 61, 161. Diese Hülse 61, 161 ist auf dem Muffenabschnitt 3, 103 verschiebbar gelagert, und zwar zwischen den vorbeschriebenen zwei Raststellungen. In der ersten Raststellung befindet sich die Hülse 61, 161 vollständig auf dem Muffenabschnitt 3, 103, so dass der Ringkragen 15, 115 frei zugänglich ist und eine Spreizung der ersten Rastarme 10, 110 durch eine senkrechte Kraft P auf den Ringkragen 15, 115 möglich ist oder die ersten Rastarme 10, 110 beim Einstecken des Gegensteckverbinders 14, 114 gespreizt werden können, siehe exemplarisch Fig. 8.

In einer erfindungsgemäßen Ausführung der Erfindung rastet in der ersten Raststellung die Hülse 61 mit an ihrem in Steckrichtung weisenden Umfangsrand 62 ausgebildeten Rastzungen 63 mit endseitigen Rastansätzen 64 kraftformschlüssig, d. h. lösbar in einer Ausnehmung 65 in der Umfangswand des Muffenabschnitts 3 ein. Vorteilhafterweise sind zwei um 180 ° zueinander versetzte Rastzungen 63 und zwei um 90 ° versetzte Ausnehmungen vorhanden. In der zweiten Raststellung umfasst die Hülse 61 auch den Ringkragen 15, siehe Fig. 11. Hierdurch ist eine Spreizung der ersten Rastarme 10 nicht mehr möglich, so dass hierdurch ein ungewolltes Lösen der Steckverbindung, bestehend aus Steckverbinder 1 und Gegensteckverbinder 14 verhindert wird. In dieser zweiten Raststellung rastet die Hülse 61 mit ihren Rastzungen 63 in der Umfangswand des Muffenabschnitts 3 in dort vorhandene Ausnehmungen 65a kraftformschlüssig ein, die mit den Rastausnehmungen 30 zusammenfallen können.

Zweckmäßigerweise besitzt die Hülse 61, 161 an ihrem Umfang Einbuchtungen 66, 166, die derart ausgebildet sind, dass in der zweiten Raststellung die am Ringkragen 15, 115 vorhandenen Ausbuchtungen innerhalb der Einbuchtungen 66, 166 liegen, so dass ein Verschieben der Hülse 61, 161 in die zweite Raststellung nicht behindert wird. Die Einbuchtungen 66, 166 können, wie in Fig. 1 und 25 dargestellt, entweder als axiale Einbuchtungen 66 ausgebildet sein oder aber alternativ als radiale Einbuchtungen der Hülsenwandung, so dass bei dieser Ausführungsform der Lösesicherung 60a die Hülsenwandung außen geschlossen ist und die Ausbuchtungen von den Einbuchtungen 66 umfangsgemäß umfasst werden.

An dem Außenumfang des Muffenabschnitts 3, 103 sind zweckmäßigerweise vier um 90 ° zueinander versetzt angeordnete Längsrippen 67, 167 ausgeformt. Die Hülse 61, 161 besitzt in Anpassung hieran in ihrer Hülsenwandung Führungsnuten 68, 168 zur Aufnahme der Längsrippen 67, 167. Hierdurch erfolgt ein lagerichtiges Aufstecken der Hülse 61, 161 auf den Muffenabschnitt 3, 103, wenn die Adapterhülse 7, 107 noch nicht in den Muffenabschnitt 3, 103 eingesteckt ist, siehe Fig. 1 und 25.

Es kann zweckmäßig sein, wenn der Ringkragen 15, 115 eine modifizierte Form besitzt. Hierbei hat der Ringkragen 15a in der nicht gespreizten Stellung der ersten Rastarme 10 eine ovale Form, siehe Fig. 12, 13, so dass der Außendurchmesser des Ringkragens 15a im Bereich der ersten Rastnocken 12 kleiner ist als im Bereich der Betätigungsabschnitte 33. Bei dem Ausführungsbeispiel gemäß Fig. 25 kann der Ringkragen 115 analog auch eine ovale Form in der nicht gespreizten Stellung der ersten Rastarme 110 aufweisen,

Somit ist sein größter Außendurchmesser im Bereich der Betätigungsabschnitte 33, 133 und sein kleinster Außendurchmesser im Bereich der ersten Rastnocken 12, 112 ausgebildet, und der größte Außendurchmesser ist größer als der Außendurchmesser der kreisförmigen Umfangskontur des Muffenabschnitts 3, 103, und sein kleinster Außendurchmesser ist kleiner als der Außendurchmesser des Muffenabschnitts 3.

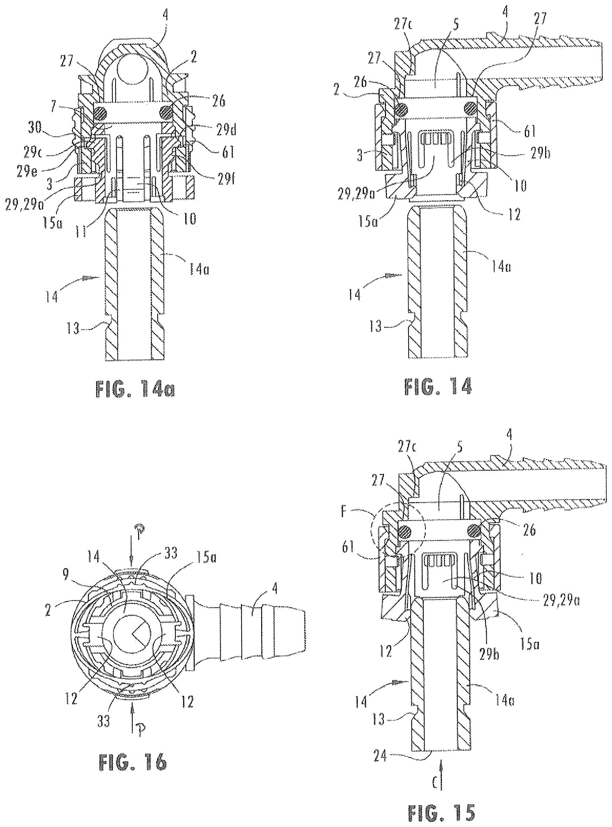

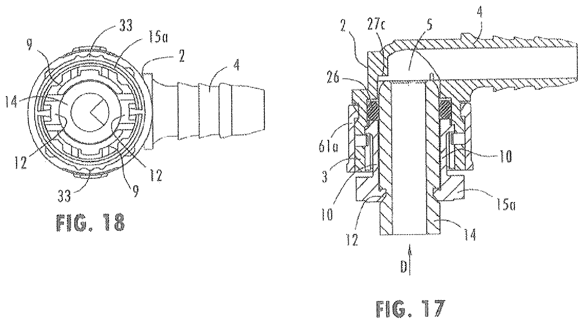

Hierbei ist der Außendurchmesser des Ringkragens 15a, 115 größer als der Außendurchmesser des Muffenabschnitts 3, 103 im Bereich der Betätigungsabschnitte 33, 133. Der radiale Abstand der ersten Rastarme 10, 110 im Bereich der ersten Rastnocken 12, 112 ist kleiner als der Innendurchmesser der Durchgangsöffnung 8, 108 im nicht montierten Zustand, siehe Fig. 14, 14a, 27 und 28. Hierdurch greifen einerseits im eingesteckten Zustand des Gegensteckverbinders 14, 114 die ersten Rastarme 10, 110 formschlüssig in die Rastnut 13, 113 des Gegensteckverbinders 14, 114 ein, siehe die Fig. 17 und 31, und andererseits werden beim Einstecken des Gegensteckverbinders 14, 114 mit seinem Steckerschaft 14a, 114a die ersten Rastarme 10, 110 derart gespreizt, dass der Ringkragen 15a, 115 eine entgegengesetzte ovale Umfangskontur einnimmt, wobei der Außenumfang des Ringkragens 15a, 115 gegenüber dem Außenumfang des Muffenabschnitts 3, 103 vorsteht, und zwar im Bereich der ersten Rastnocken 12, 112, siehe beispielhaft Fig. 15 und 16. Die ersten Rastarme 10, 110 einschließlich der ersten Rastnocken 12, 112 sind derart in ihrem radialen Abstand bemessen, dass im eingerasteten Zustand in der Rastnut 13, 113 der Ringkragen 15a, 115 eine derartige Kreisform besitzt, dass sein Außendurchmesser kleiner/gleich dem Außendurchmesser des Muffenabschnitts 3, 103 ist, siehe exemplarisch Fig. 17, 18. Die Ausbildung des Ringkragens 15a, 115 ermöglicht, dass in der nicht montierten Stellung des Gegensteckverbinders 14, 114, siehe die Fig. 14a und 28, sowie beim Einstecken des Gegensteckverbinders 14, 114 in die Adapterhülse 7, siehe exemplarisch Fig. 15, die Hülse 61, 61a, 161 nicht über den Ringkragen 15a, 115 verschiebbar ist, jedoch im eingesteckten Zustand des Gegensteckverbinders 14, 114 über den Ringkragen 15a, 115 in ihre zweite Stellung verschiebbar ist, siehe die Fig. 17 und 31. Somit ermöglicht die ovale Ausbildung des Ringkragens 15a, 115, wie im Vorstehenden beschrieben, eine Zweifachsicherung der Steckverbindung gegen ungewolltes Verschieben der Hülse 61, 161 und Lösen des Gegensteckverbinders 14, 114 aus dem Steckverbinder 1, 101.

Ein Anschlussabschnitt 24, 124 des Gegensteckverbinders 14, 114 kann als Anschlusshülse zum Einstecken oder Einschrauben eines Fluidanschlusses oder eines weiteren Verbinderteils ausgebildet sein, siehe die Fig. 1 und 25. Alternativ kann der Anschlussabschnitt 24, 124 auch als Anschlusszapfen zum Aufstecken einer Fluidleitung hergestellt sein.

Durch den Gegensteckverbinder 14, 114 verläuft ein Fluidkanal 34, 134, der zweckmäßigerweise einen Kanal-Innendurchmesser besitzt, der dem Innendurchmesser des Durchgangskanals 5, 105 des Gehäuses 2, 102 entspricht.

Der Gegensteckverbinder 14, 114 besitzt einen Steckerschaft 14a, 114a, der einen kreisförmigen Querschnitt senkrecht zu seiner Mittelachse aufweist. Der Außendurchmesser des Steckerschaftes 14a, 114a ist größer als ein radialer Abstand der ersten Rastnocken 12, 112, so dass die ersten Rastarme 10, 110 beim Einstecken des Steckerschaftes 14a, 114a radial nach außen verbogen werden, siehe hierzu beispielhaft die Fig. 8, 15. An seinem in Einsteckrichtung Z vorderen Ende weist der Steckerschaft 14a, 114a die umfänglich verlaufende Rastnut 13, 113 auf. Diese Rastnut 13, 113 besitzt eine in Einsteckrichtung Z vordere, senkrecht zur Mittelachse X-X verlaufende Anlagefläche, die mit einer ebenfalls senkrecht zur Längsmittelachse X-X verlaufenden Anlagefläche des Rastnockens 12, 112 derart zusammenwirkt, dass ein Formschluss im eingerasteten Zustand in axialer Richtung gegeben ist, so dass ein selbständiges Lösen des Steckerzapfens bzw. des Steckerschaftes 14a, 114a unter Zugbeanspruchung nicht erfolgen kann. An dem dem Steckerschaft 14a, 114a gegenüberliegenden Ende des Gegensteckverbinders 14, 114 ist der Anschlussabschnitt 24, 124 zum Anschluss einer Fluidleitung oder eines Aggregats vorgesehen. Zwischen dem Anschlussabschnitt 24, 124 und der Rastnut 13, 113 kann ein Ringbund angeformt sein, der als Anschlag dienen kann. Die Länge des Steckerschaftes 14a, 114a ist insbesondere derart bemessen, dass dieser im eingesteckten Zustand in die Adapterhülse 7, 107 mit seinem freien Ende aus der Adapterhülse 7, 107 bis in den Durchgangskanal 5, 105 des Gehäuses 2, 102 hinein verläuft.

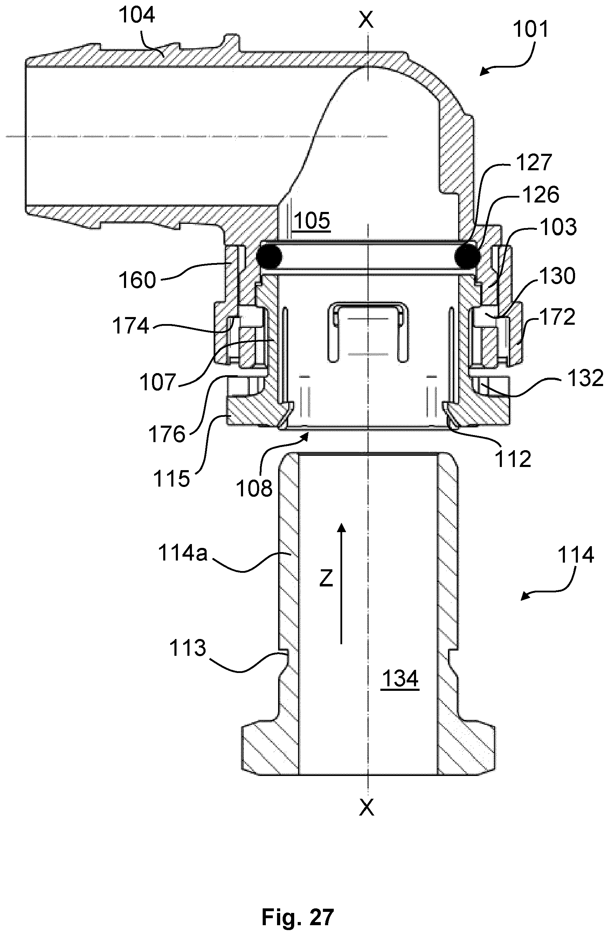

Weiterhin ist zweckmäßigerweise vorgesehen, siehe die Fig. 7 und 27, dass innerhalb des Muffenabschnitts 3, 103 die Umfangsdichtung 26, 126 in Einsteckrichtung Z vor der Adapterhülse 7, 107 angeordnet ist. Diese Umfangsdichtung 26, 126 dichtet den Umfangsspalt zwischen dem Steckerschaft 14a, 114a in dessen eingestecktem Zustand ab und ist zwischen einer Ringschulter 27, 127 am Übergang des Muffenabschnitts 3, 103 und einer Stirnendfläche der Adapterhülse 7, 107 eingekammert. Auf Grund dieser Ausgestaltung entfällt die Ausbildung einer Aufnahmenut für die Umfangsdichtung 26, 126, so dass fertigungstechnisch die Ausbildung von Hinterschnitten nicht erforderlich ist. Darüber hinaus ist die Umfangsdichtung 26, 126 im montierten Zustand der Adapterhülse 7, 107 im Innern des Muffenabschnitts 3, 103 geschützt angeordnet. Der Innendurchmesser des Durchgangskanals 5, 105 des Gehäuses 2, 102 und der Innendurchmesser der Durchgangsöffnung 8, 108 der Adapterhülse 7, 107 sind an den Außendurchmesser des Steckerschaftes 14a, 114a des Gegensteckverbinders 14, 114 angepasst. Zweckmäßigerweise sind der Innendurchmesser des Durchgangskanals 5, 105 und der Durchgangsöffnung 8, 108 gleich groß. Durch eine elastische Verformung des Dichtrings 26, 126, die durch das Einstecken des Steckerschaftes 14a, 114a verursacht wird, erfolgt einerseits eine Abdichtung nach außen und andererseits eine Fixierung des Steckerschaftes 14a, 114a in der Adapterhülse 7, 107 bzw. im Muffenabschnitt 3, 103 durch die innerhalb der O-Dichtung erzeugten Verformungsspannung. Die Ringstufe 9b, 109b der Adapterhülse 7, 107 besitzt eine radial zur Längsmittelachse X-X verlaufende, umlaufende Anlagefläche. Der Kanalabschnitt 6, 106 besitzt z. B. eine im Sinne einer Durchmesservergrößerung ausgebildete ringförmige Anschlagfläche, die derart angeordnet ist, dass die Umfangsdichtung 26, 126 zwischen der Ringschulter 27, 127 und der Anschlagfläche verläuft. Im eingesteckten Zustand liegt die Adapterhülse 7, 107 mit ihrer Anlagefläche an der Anschlagfläche an, und die Adapterhülse 7, 107 ragt mit ihrer Ringstufe 9b, 109b in den Abschnitt des Kanalabschnitts 6, 106 hinein, der von der Umfangsdichtung 6, 106 abgedichtet wird.

Durch die vorstehende Ausbildung erfolgt ein geometrischer Abschluss der Aufnahme für die Umfangsdichtung 26, 126, eine Begrenzung des Übersteckweges bei der Montage der Adapterhülse 7, 107, eine Aufnahme bzw. Weiterleitung der Aufdornkraft, sowie eine Aufrechterhaltung eines Spaltmaßes zwischen dem Muffenabschnitt 3, 103 des Gehäuses 2, 102 und der Adapterhülse 7, 107.

Weiterhin ist es von Vorteil, wenn im Inneren der Durchgangsbohrung 6, 106 in Einsteckrichtung hinter der Ringschulter 27, 127 im Sinne einer Durchmesserverringerung eine radial gerichtete Anschlagfläche 27c, 127c ausgebildet ist, wodurch ein Tiefenanschlag gegeben ist, siehe Fig. 7, 8 und 27.

Wie zur Veranschaulichung in den Fig. 8, 9 und 15, 16 dargestellt ist, steht der Ringkragen 15, 15a, 115 mit seinen mit den Rastarmen 10, 110 verbundenen Abschnitten radial nach außen vor, wenn der Gegensteckverbinder 14, 114 noch nicht vollständig eingesteckt ist, so dass der Ringkragen 15, 15a, 115 eine ovale Form einnimmt. Hierdurch ist eine optische Kontrolle gegeben, ob die Einraststellung erreicht ist oder nicht. Denn in der Einraststellung schließt der Ringkragen 15, 115 mit seinem äußeren Umfang mit dem äußeren Umfang des Muffenabschnitts 3, 103 umfangsgemäß bündig ab, wobei dann der Ringkragen 15, 15a, 115 eine kreisförmige Umfangskontur besitzt.

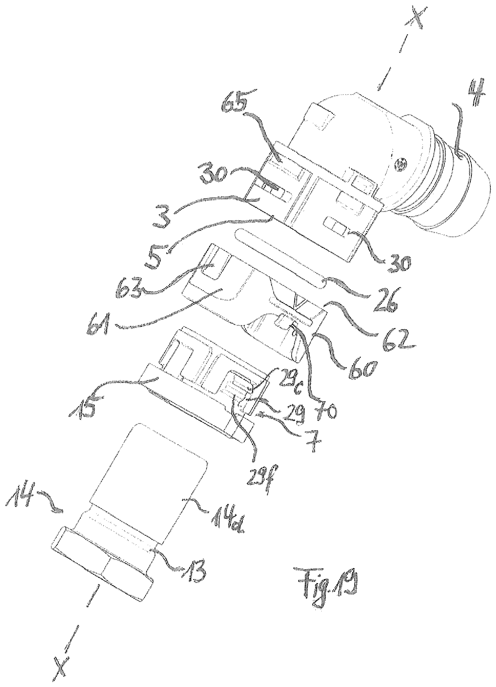

In Figur 19 ist ein erfindungsgemäßer Steckverbinder 1 in Explosionsdarstellung gezeigt, wobei vollumfänglich auf die Beschreibung zu den Figuren 1 bis 18 verwiesen wird.

In den Figuren 19 bis 24 des erfindungsgemäßen Steckverbinders 1 sind gleiche bzw. funktionsgleiche Teile wie in den Figuren 1 bis 18 mit denselben Bezugsziffern gekennzeichnet.

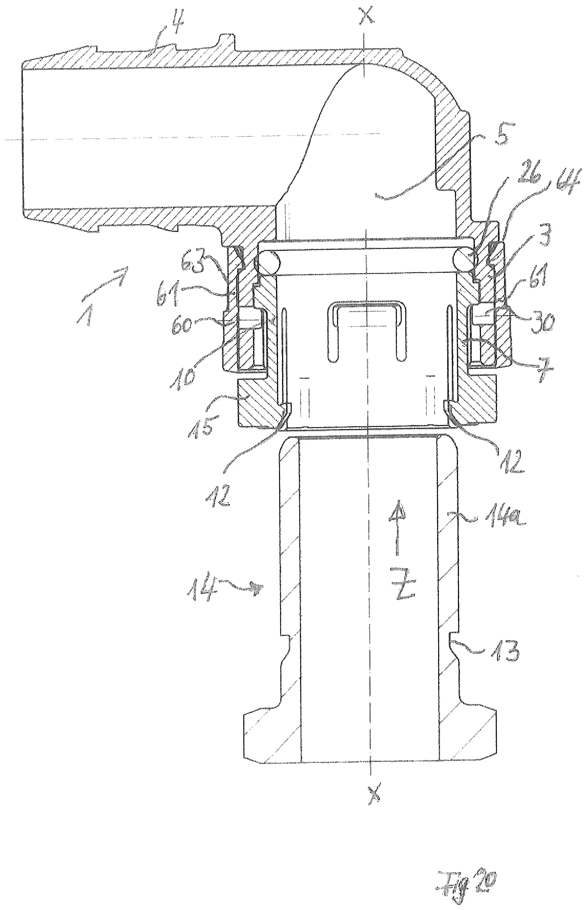

In Figur 20 ist ein erfindungsgemäßer Steckverbinder 1 im Schnitt dargestellt, und zwar in seiner Montagestellung, bevor der Gegensteckverbinder 14 in den Steckverbinder 1 eingesteckt ist. Hierzu wird im vollen Umfang auf die Figuren 1 bis 7 verwiesen.

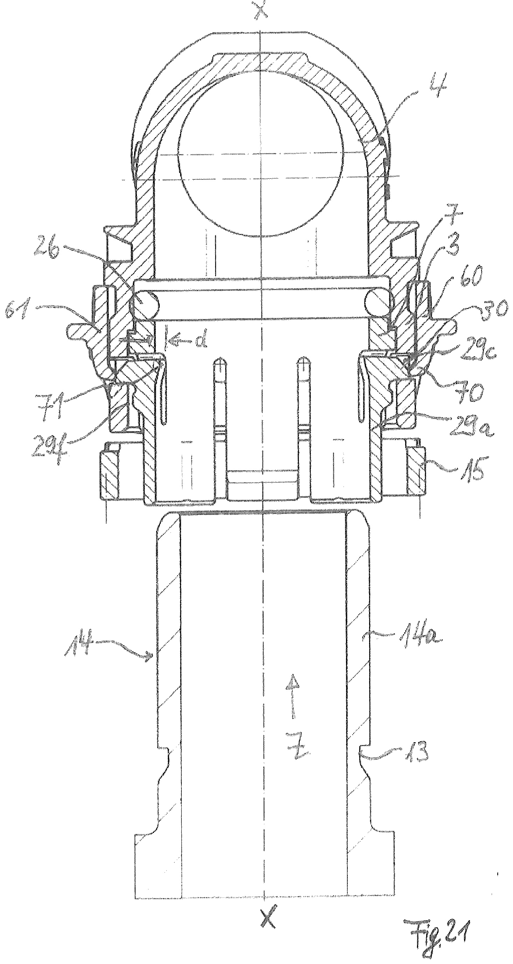

In Figur 21 ist eine Schnittstellung des Steckverbinders 1 gemäß Figur 20 in einer um 90° gedrehten Lage dargestellt. Hierbei sind wiederum gleiche Teile wie in den Figuren 1 bis 18 und in Figur 20 mit denselben Bezugsziffern gekennzeichnet.

In den Figuren 20, 21 ist die Lösesicherung 60 in ihrer ersten Raststellung dargestellt, wobei die Rastzungen 63 in den Ausnehmungen 65 eingerastet sind.

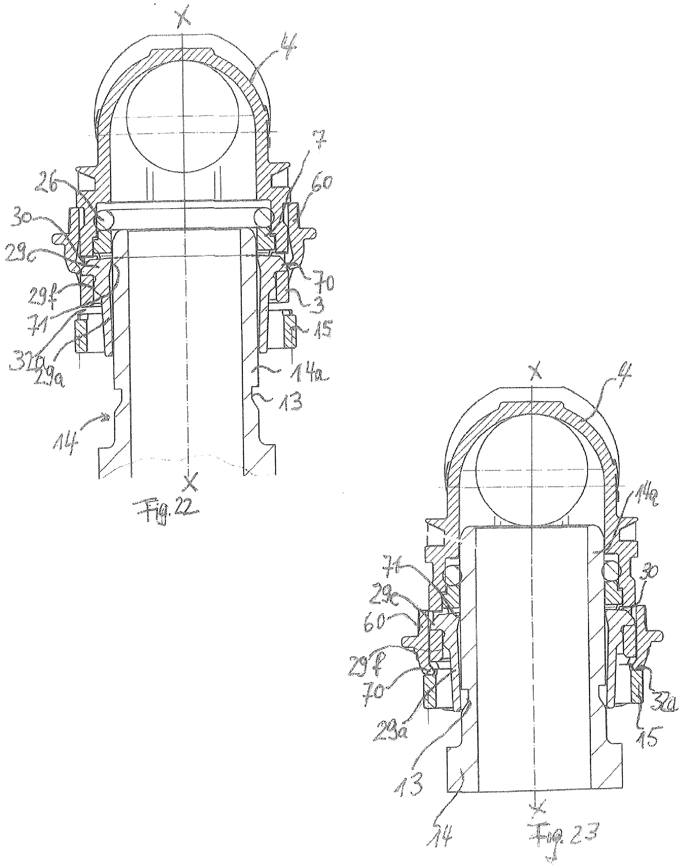

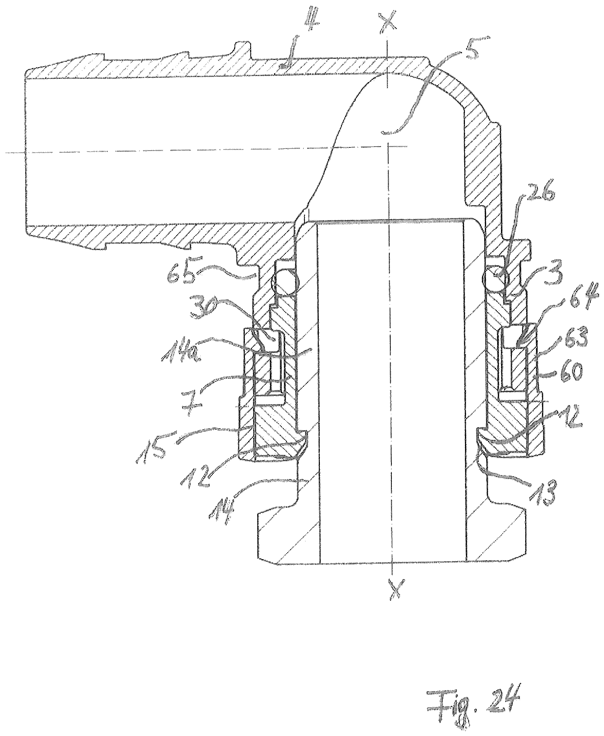

Erfindungsgemäß sind nun im Unterschied zu der bei den Figuren 1 bis 18 verwendeten Lösesicherung 60 bei der in den Figuren 19 bis 23 dargestellten Lösesicherung 60 an ihrem entgegen der Einsteckrichtung weisenden Rand zusätzlich hakenförmige Rastfortsätze 70, jeweils um 180° zueinander versetzt, diametral gegenüberliegend vorgesehen. Diese Rastfortsätze 70 sind jeweils um 90° versetzt zu den Ausnehmungen 65 angeordnet. Hierbei sind die hakenförmigen Rastfortsätze 70 derart ausgebildet, dass sie in der ersten Raststellung der Lösesicherung 60 - siehe Fig. 20, 21 - in die jeweiligen Rastausnehmungen 30 in der Umfangswand des Muffenteils 3 rastend eingreifen und entgegen der Einsteckrichtung formschlüssig fixiert sind. Durch diese Ausbildung der hakenförmigen Rastfortsätze 70 wird verhindert, dass sich die Lösesicherung 60 aus der Montagestellung unbeabsichtigt lösen kann und die Lösesicherung 60 sich ungewollt in die zweite Raststellung bewegen kann, wodurch eine Blockade der Spreizung der ersten Rastnocken 12 verhindert würde. Die hakenförmigen Rastfortsätze 70 greifen in das Innere der jeweiligen Rastausnehmung 30 ein. Durch eine vorteilhafterweise konische Ausbildung der hakenförmigen Rastfortsätze 70 wird einerseits der Formschluss gegenüber der in Einsteckrichtung weisenden Wandung der Ausnehmung 30 und andererseits ein Aufweiten der Rastfortsätze 70 beim Aufschieben der Lösesicherung auf den Muffenabschnitt 3 gewährleistet. Weiterhin ist erfindungsgemäß vorgesehen, dass die zweiten Rastnocken 29 c, siehe Figur 21, derart einen in Richtung auf die Mittellängsachse X-X vorstehenden Betätigungsansatz 71 aufweisen, dass bedingt durch das Einstecken des Gegensteckverbinders 14 in die Adapterhülse 7 die zweiten Rastnocken 29 c um ein Verschiebemaß d innerhalb der jeweiligen Rastausnehmung 30 derart verschoben werden, dass die zweiten Rastnocken 29 c in der Öffnungsebene einer außenseitigen Öffnung der jeweiligen Rastausnehmung 30 enden, wodurch der jeweilige hineinragende hakenförmige Rastfortsatz 70 aus seiner formschlüssigen Raststellung gelöst wird, siehe Fig. 22, und die Lösesicherung in ihre zweite Raststellung verschoben werden kann, in der die hakenförmigen Rastfortsätze 70 in den Spalt 32a zwischen dem Ringkragen 15 und dem Muffenteil 3 eingreifen, siehe Fig. 23. Die Verschiebung der Lösesicherung 60 kann nur bei einem korrekt durchgeführten Steckvorgang des Gegensteckverbinders 14 in den Steckverbinder 1 in die verrastete Position erfolgen, bei der die Lösesicherung 60 mit ihren hakenförmigen Rastfortsätzen 70 in den Spalt 32a eingreift, wobei wiederum eine Formschlussfixierung entgegen der Steckrichtung mittels des Ringkragens 15 erfolgt. Wird der Steckerschaft 14a so tief eingeschoben, dass die Lösesicherung 60 freigegeben wird, siehe Fig. 22, kann die Lösesicherung 60 erst über den Ringkragen 15 geschoben werden, wenn der Steckerschaft 14a vollständig gesteckt ist, siehe Fig. 24. Die Höhe der Betätigungsansätze 71 ist gleich dem Verschiebemaß d und die Betätigungsansätze 71 weisen eine in Richtung auf die Längsachse X-X weisende endseitige Schrägfläche auf, die zur Anlage an den Gegensteckverbinder 14 beim Einstecken desselben kommt. Weiterhin ist es erfindungsgemäß von Vorteil, wenn die Abstütznocken 29f gegenüber den Betätigungsansätzen 71 entgegen der Einsteckrichtung versetzt derart an den Armen 29a der Rastmittel 29 ausgebildet sind, dass deren in Richtung auf die Wandung des Muffenteils 3 weisende Endfläche von der Wandung mindestens um das Verschiebemaß d entfernt ist. Hierdurch wird sichergestellt, dass die Abstütznocken 29f nicht die Verschiebung der zweiten Rastnocken 29c behindern.

In den Figuren 22, 23 sind im Unterschied zu den Figuren 20 und 21 die jeweiligen Stellungen der verschiedenen Bauteile in der vollständig gesteckten Form des Gegensteckverbinders 14 dargestellt. Hierbei sind die ersten Rastnocken 12 in der Rastnut 13 des Gegensteckverbinders 14 eingerastet und die Lösesicherung 60 befindet sich in ihrer zweiten Raststellung, wobei die Rastzungen 63 mit ihren Rastansätzen 64 in den Rastausnehmungen 30 eingerastet sind, siehe Fig. 23, und zwar formschlüssig entgegen der Einsteckrichtung, wobei die Lösesicherung 60 mit einem Teilabschnitt den Ringkragen 15 derart umfasst, dass eine Weitung desselben nicht möglich ist bzw. verhindert wird, und sich die hakenförmigen Rastfortsätze 70 innerhalb des Spaltes 32a zwischen dem Ringkragen 15 und dem Muffenteil 3 befinden, siehe Fig. 24.

Wie im Übrigen aus den Figuren 19 bis 24 zu entnehmen ist, besitzt die verwendete Lösesicherung 60 eine Kontur, wie sie in Figur 1 in Bezug auf die Lösesicherung 60 dargestellt und beschrieben ist. Die Hülse 61 der Lösesicherung 60 besitzt im Bereich ihrer hakenförmigen Fortsätze 70 eine derartige Höhe, dass in ihrer zweiten Raststellung die hakenförmigen freien Enden der Rastfortsätze 70 in den Spalt 32a zwischen dem Ringkragen 15 und dem Muffenteil 3 eingreifen. Im Übrigen umfasst der erfindungsgemäße Steckverbinder 1 auch die zu den Figuren 1 bis 18 beschriebenen Merkmale.

In Figur 25 ist ein weiterer erfindungsgemäßer Steckverbinder 101 in Explosionsdarstellung gezeigt, wobei vollumfänglich auf die Beschreibung zu den Figuren 1 bis 24 verwiesen wird.

In den Figuren 19 bis 24 des erfindungsgemäßen Steckverbinders 1 sind gleiche bzw. funktionsgleiche Teile wie in den Figuren 1 bis 24 mit denselben Bezugsziffern, plus 100 addiert, gekennzeichnet.

In Figur 27 ist ein erfindungsgemäßer Steckverbinder 101 im Schnitt dargestellt, und zwar in seiner Montagestellung, bevor der Gegensteckverbinder 114 in den Steckverbinder 101 eingesteckt ist. Hierzu wird im vollen Umfang auf die Figuren 1 bis 7 und 20 verwiesen.

In Figur 28 ist eine Schnittstellung des Steckverbinders 101 gemäß Figur 27 in einer um 90 ° gedrehten Lage dargestellt. Hierbei sind wiederum gleiche Teile wie in den Figuren 1 bis 24 mit denselben Bezugsziffern plus 100 addiert, gekennzeichnet.

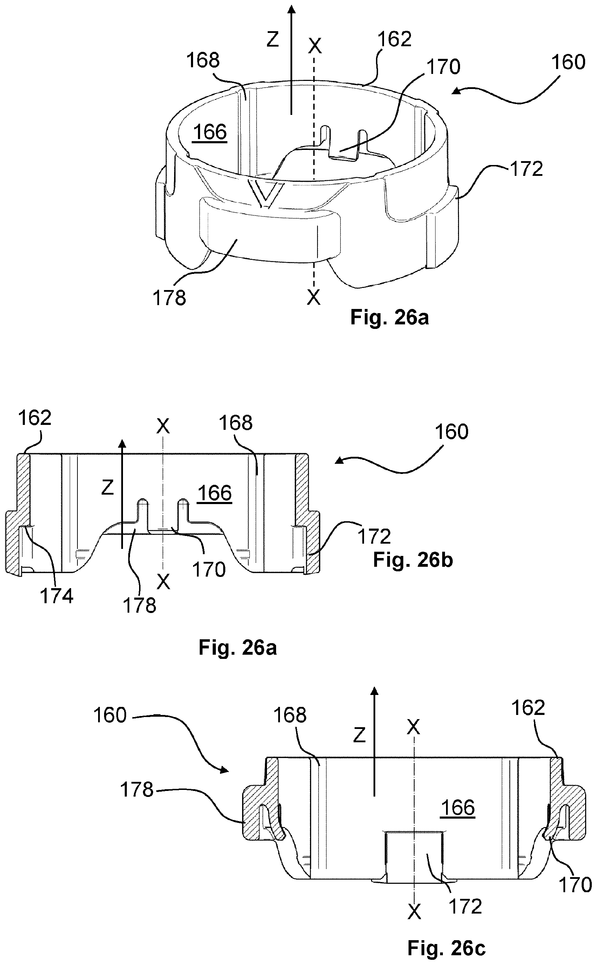

In den Figuren 26a bis 26c ist die Lösesicherung 160 aus dem Ausführungsbeispiel gemäß Fig. 25 dargestellt. Anders als die in den Figuren 1 bis 24 dargestellten Ausführungen weist die Hülse 161 der Lösesicherung 160 keine Rastzungen, sondern erfindungsgemäß ein an ihrem in Einsteckrichtung Z weisenden Umfangsrand ein geschlossenes Ringprofil auf. Das geschlossene Ringprofil erhöht die Steifigkeit und die Widerstandsfähigkeit der Lösesicherung 160.

Weiterhin sieht es der Steckverbinder 101 nach den Fig. 25 bis 31 erfindungsgemäß vor, dass die Hülse 161 der Lösesicherung 160 an ihrem entgegen der Einsteckrichtung Z weisenden Rand hakenförmige Rastfortsätze 170 aufweist. Die Rastfortsätze entsprechen im Wesentlichen den Rastfortsätzen 70 nach einem der vorgenannten Ausführungsbeispiele.

Analog zu dem in den Fig. 19 bis 24 dargestellten Ausführungsbeispiel besitzt die Wandung der Hülse 161 der Lösesicherung 160 erfindungsgemäß im Bereich der hakenförmigen Rastfortsätze 170 eine derartige Höhe, dass in der zweiten Raststellung der Lösesicherung 160 die hakenförmigen freien Enden der Rastfortsätze 170 in einem Spalt 132a zwischen dem Ringkragen 115 und dem Muffenteil 103 eingreifen und in der ersten Raststellung der Lösesicherung 160 selbige in die jeweiligen Rastausnehmungen 130 eingreifen und entgegen der Einsteckrichtung Z formschlüssig fixiert sind. Weiterhin weisen die zweiten Rastnocken 129c der Formschlusselemente 129 gemäß der Erfindung derart einen in Richtung auf die Längsachse X-X weisenden Betätigungsansatz 171 auf, dass bedingt durch das Einstecken des Gegensteckverbinders 114 in die Adapterhülse 107 die zweiten Rastnocken 129c um ein Verschiebemaß d innerhalb der jeweiligen Rastausnehmung 130 derart verschiebbar sind, dass die zweiten Rastnocken 129c mit ihren freien Enden in der Öffnungsebene einer außenseitigen Öffnung der jeweiligen Rastausnehmung 130 liegen, wodurch der hakenförmige Rastfortsatz 170 aus seiner formschlüssigen Raststellung gelöst wird.

Insbesondere kann der Steckverbinder der in den Fig. 25 bis 31 dargestellten Art die vorteilhaften Merkmale der Ausführungen gemäß den Fig. 1 bis 24 einzeln oder in Kombination, mit Ausnahme der Rastzungen des Löseelements, aufweisen.

In den Figuren 27, 28 ist die Lösesicherung 160 in ihrer ersten Raststellung dargestellt.

Die Rastfortsätze 170 sind vorzugsweise um 90 ° versetzt zu den Ausnehmungen 30 angeordnet, wobei die hakenförmigen Rastfortsätze 170 derart ausgebildet sind, dass sie in der ersten Raststellung der Lösesicherung 160 - siehe Fig. 28 - in die jeweiligen Rastausnehmungen 130 in der Umfangswand des Muffenteils 103 rastend eingreifen und entgegen der Einsteckrichtung formschlüssig fixiert sind.

Durch diese Ausbildung der hakenförmigen Rastfortsätze 170 wird verhindert, dass sich die Lösesicherung 160 aus der Montagestellung unbeabsichtigt lösen und sich ungewollt in die zweite Raststellung bewegen kann, wodurch eine Blockade der Spreizung der ersten Rastnocken 112 verhindert würde.

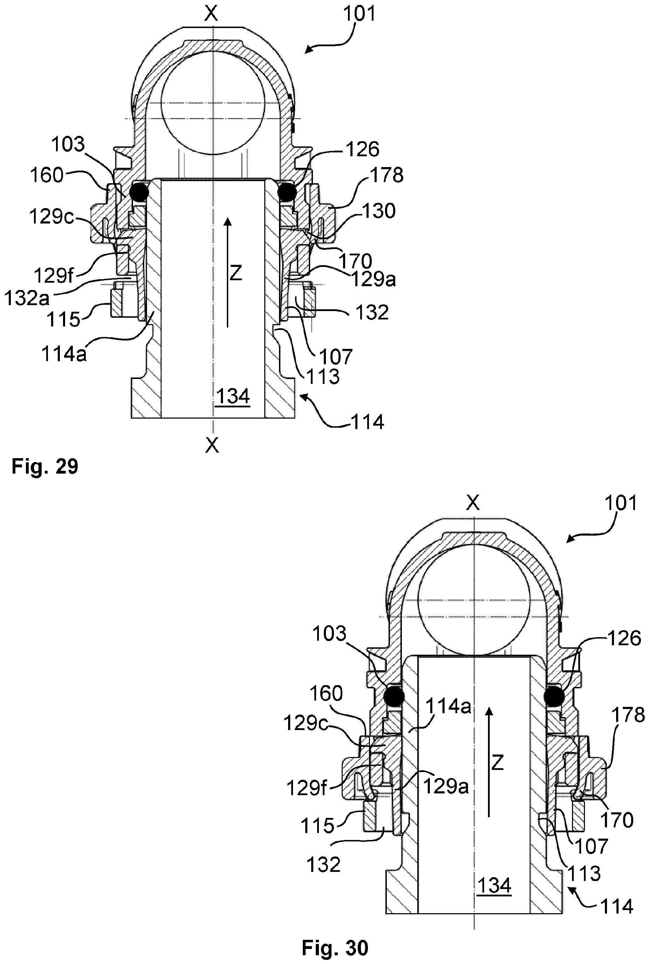

Die hakenförmigen Rastfortsätze 170 greifen in das Innere der jeweiligen Rastausnehmung 130 ein. Durch eine vorteilhafterweise konische Ausbildung der hakenförmigen Rastfortsätze 170 wird einerseits der Formschluss gegenüber der in Einsteckrichtung weisenden Wandung der Ausnehmung 130 und andererseits ein Aufweiten der Rastfortsätze 170 beim Aufschieben der Lösesicherung auf den Muffenabschnitt 103 gewährleistet. Weiterhin ist erfindungsgemäß vorgesehen, dass die zweiten Rastnocken 129c, siehe Figur 28, derart einen in Richtung auf die Mittellängsachse X-X vorstehenden Betätigungsansatz 171 aufweisen, dass bedingt durch das Einstecken des Gegensteckverbinders 114 in die Adapterhülse 107 die zweiten Rastnocken 129c um ein Verschiebemaß d innerhalb der jeweiligen Rastausnehmung 130 derart verschoben werden, dass die zweiten Rastnocken 129c in der Öffnungsebene einer außenseitigen Öffnung der jeweiligen Rastausnehmung 130 enden, wodurch der jeweilige hineinragende hakenförmige Rastfortsatz 170 aus seiner formschlüssigen Raststellung gelöst wird, siehe Fig. 29, und die Lösesicherung in ihre zweite Raststellung verschoben werden kann, in der die hakenförmigen Rastfortsätze 170 in den Spalt 132a zwischen dem Ringkragen 115 und dem Muffenteil 103 eingreifen, siehe Fig. 30. Die Verschiebung der Lösesicherung 160 kann nur bei einem korrekt durchgeführten Steckvorgang des Gegensteckverbinders 114 in den Steckverbinder 101 in die verrastete Position erfolgen, bei der die Lösesicherung 160 mit ihren hakenförmigen Rastfortsätzen 170 in den Spalt 132a eingreift, wobei wiederum eine Formschlussfixierung entgegen der Steckrichtung mittels des Ringkragens 115 erfolgt. Wird der Steckerschaft 114a so tief eingeschoben, dass die Lösesicherung 160 freigegeben wird, kann die Lösesicherung 160 erst über den Ringkragen 115 geschoben werden, wenn der Steckerschaft 114a vollständig gesteckt ist. Der Steckvorgang zu diesen Zeitpunkten sind identisch mit den in den Fig. 22 und 24 dargestellten Zustandsdarstellungen.

Die Höhe der Betätigungsansätze 171 ist zweckmäßig gleich dem Verschiebemaß d, und die Betätigungsansätze 171 weisen vorzugsweise eine in Richtung auf die Längsachse X-X weisende endseitige Schrägfläche auf, die zur Anlage an den Gegensteckverbinder 114 beim Einstecken desselben kommt. Weiterhin ist es erfindungsgemäß von Vorteil, wenn die Abstütznocken 129f gegenüber den Betätigungsansätzen 171 entgegen der Einsteckrichtung versetzt derart an den Armen 129a der Rastmittel 129 ausgebildet sind, dass deren in Richtung auf die Wandung des Muffenteils 103 weisende Endfläche von der Wandung mindestens um das Verschiebemaß d entfernt ist. Hierdurch wird sichergestellt, dass die Abstütznocken 129f nicht die Verschiebung der zweiten Rastnocken 129c behindern.

In den Figuren 30 und 31 sind die jeweiligen Stellungen der verschiedenen Bauteile in der vollständig gesteckten Form des Gegensteckverbinders 114 dargestellt. Hierbei sind die ersten Rastnocken 112 in der Rastnut 113 des Gegensteckverbinders 114 eingerastet, und die Lösesicherung 160 befindet sich in ihrer zweiten Raststellung, wobei sich die hakenförmigen Rastfortsätze 170 innerhalb des Spaltes 132a zwischen dem Ringkragen 115 und dem Muffenteil 103 befinden, siehe Fig. 30.

Wie im Übrigen aus den Figuren 25 bis 31 zu entnehmen ist, besitzt die verwendete Lösesicherung 160 eine Kontur, wie sie in Figur 1 in Bezug auf die Lösesicherung 60 dargestellt und beschrieben ist. Die Hülse 161 der Lösesicherung 160 besitzt im Bereich ihrer hakenförmigen Fortsätze 170 eine derartige Höhe, dass in ihrer zweiten Raststellung die hakenförmigen freien Enden der Rastfortsätze 170 in den Spalt 132a zwischen dem Ringkragen 115 und dem Muffenteil 103 eingreifen.

In vorteilhafter Art können die vorgehend beschriebenen Steckverbinder 1, 101 bzw. die Hülse 61, 161 der Lösesicherung 60, 160 Lagertaschen 172 aufweisen. Diese Ausführung ist zweckmäßig in Fig. 27 dargestellt. Die Lagertaschen 172 sind entgegen der Einsteckrichtung Z und radial zur Längsachse X-X weisenden geöffnet ausgebildet. Zweckmäßig weisen die Lagertaschen 172 weiterhin jeweils eine entgegen der Einsteckrichtung Z weisende Anschlagsfläche 174 auf, welche in der zweiten Raststellung, wie in Fig. 31 veranschaulicht, an einer korrespondierend ausgebildeten Gegenanschlagsfläche 176 der Adapterhülse 7, 107 anliegt. Mittels der Anlage ist formschlüssig eine Verschiebung der Hülse 61, 161 entgegen der Einsteckrichtung Z blockiert.

In einer besonders bevorzugten Variante ist die Gegenanschlagfläche 176 am Ringkragen 15, 15a, 115 ausgebildet und axial in Einsteckrichtung Z weisend hinter den Rastmitteln 10, 12, 110, 112 angeordnet.

Weiterhin weisen die vorgehend beschriebenen Steckverbinder 1, 101 bzw. die Hülse 61, 161 der Lösesicherung 60, 160 im Bereich der hakenförmigen Rastfortsätze 70, 170 am Außenumfang zumindest eine Materialverstärkung 178 auf. Die Materialverstärkungen 178 erhöhen insbesondere die Steifigkeit- und Robustheit der Hülse 61, 161 im Bereich der hakenförmigen Rastfortsätze 70, 171. In den Fig. 26a und 26c sind die Materialverstärkungen 178 vorteilhaft dargestellt.

Zweckmäßig umfassen die Materialverstärkungen 178, wie in Fig. 26c dargestellt, jeweils radial zur Längsachse X-X außenliegend zumindest teilweise die hakenförmigen Rastfortsätze 70, 170.

Die Erfindung ist nicht auf die dargestellten und beschriebenen Ausführungsbeispiele beschränkt, sondern umfasst auch alle im Sinne der Erfindung gleichwirkenden Ausführungen. Es wird ausdrücklich betont, dass die Ausführungsbeispiele nicht auf alle Merkmale in Kombination beschränkt sind, vielmehr kann jedes einzelne Teilmerkmal auch losgelöst von allen anderen Teilmerkmalen für sich eine erfinderische Bedeutung haben. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmale definiert sein. Dies bedeutet, dass grundsätzlich praktisch jedes Einzelmerkmal des Anspruchs 1 weggelassen beziehungsweise durch mindestens ein an anderer Stelle der Anmeldung offenbartes Einzelmerkmal ersetzt werden kann.

### Bezugszeichenliste

- 1,101: Steckverbinder
- 2, 102: Gehäuse
- 3, 103: Muffenabschnitt
- 4, 104: Steckabschnitt
- 5, 105: Durchgangskanal
- 6, 106: Kanalabschnitt
- 7, 107: Adapterhülse
- 8, 108: Durchgangsöffnung
- 9, 109: Hülsenwandung
- 9a, 109a: Stufenfläche
- 9b, 109b: Ringstufe
- 9c, 109c: Führungsnuten
- 9d, 109d: Einführungsöffnung
- 9e: Führungsrippen
- 10, 110: Erste Rastarme
- 11, 111: Freischnitte
- 12, 112: Erste Rastnocken
- 13, 113: Rastnut
- 14, 114: Gegensteckverbinder
- 14a, 114a: Steckerschaft
- 15, 115: Ringkragen
- 15a, 115a: Ringkragen
- 24, 124: Anschlussabschnitt
- 26, 126: Umfangsdichtung
- 27, 127: Ringschulter
- 27c, 127c: radiale Anschlagfläche
- 29, 129: Formschlusselemente
- 29a, 129a: Rastarme
- 29b, 129b: U-förmiger Schlitz
- 29c, 129c: Zweite Rastnocken
- 29d, 129d: Schrägflächen
- 29e, 129e: Rastfläche
- 29f, 129f: Versteifungsansatz
- 30, 130: Rastausnehmungen
- 32, 132: Spaltabschnitte
- 32a, 132a: Spalt
- 33, 133: Verformungsabschnitte
- 34, 134: Fluidkanal
- 60, 160: Lösesicherung
- 60a, 160a: Alternative Ausführungsform der Lösesicherung
- 61, 161: Hülse
- 61a: Alternative Ausführungsform der Hülse
- 62, 162: Umfangsrand
- 63: Erste Rastzungen
- 64: Rastansätze
- 65: Zweite Rastausnehmung
- 65a: Alternative Ausführungsform der Ausnehmungen
- 66, 166: Einbuchtungen
- 67, 167: Längsrippen
- 68, 168: Führungsnuten
- 70, 170: Rastfortsätze
- 71, 171: Betätigungsansatz
- 172: Lagertasche
- 174: Anschlagsfläche
- 176: Gegenanschlagsfläche
- 178: Materialverstärkung

- Z: Einsteckrichtung
- X-X: Längsmittelachse

## Patentansprüche

1. Steckverbinder (1) zum Verbinden von mindestens einer Fluidleitung mit einer anderen Fluidleitung oder einem Aggregatanschluss, umfassend ein Gehäuse (2) mit einem Durchgangskanal (5), wobei ein Ende des Gehäuses (2) als Muffenabschnitt (3) zum Einstecken eines Gegensteckverbinders (14) ausgebildet ist, und Rastmittel (10, 12) zum lösbaren Fixieren des Gegensteckverbinders (14) aufweist, wobei die Rastmittel (10, 12) Bestandteil einer in den Muffenabschnitt (3) steckbaren Adapterhülse (7) sind, die im Muffenabschnitt (3) mittels radial elastischer Formschlusselemente (29) gehalten ist, und eine Durchgangsöffnung (8) für einen Steckerschaft (14a) des Gegensteckverbinders (14) aufweist, sowie die Rastmittel (10, 12) aus mindestens zwei in Bezug auf eine Längsmittelachse (X-X) des Steckverbinders (1) radial elastischen ersten Rastarmen (10) gebildet sind, und die ersten Rastarme (10) an ihren freien Enden radial in Richtung auf die Längsmittelachse (X-X) verlaufende erste Rastnocken (12) aufweisen, wobei die Formschlusselemente (29) aus am äußeren Umfang der Adapterhülse (7) zwischen den ersten Rastarmen (10) ausgebildeten und jeweils parallel zur Längsmittelachse (X-X) verlaufenden, radial elastisch verbiegbaren Armen (29a) gebildet sind, die diametral gegenüberliegen und an ihren freien, in Einsteckrichtung (Z) weisenden Enden nach außen abstehende zweite Rastnocken (29c) aufweisen, wobei die Formschlusselemente (29) in ihrem in den Muffenabschnitt (3) eingesteckten Zustand mit den zweiten Rastnocken (29c) in Rastausnehmungen (30) in der Umfangswand des Muffenabschnitts (3) formschlüssig rastend eingreifen, und am Außenumfang des Muffenabschnitts (3) eine Lösesicherung (60) in Richtung der Längsmittelachse (X-X) zwischen zwei Raststellungen verschiebbar angeordnet ist, wobei die Lösesicherung (60) in ihrer auf einem Ringkragen (15) der Adapterhülse (7) verschobenen zweiten Raststellung eine Spreizung der Rastarme (10) verhindert und in ihrer anderen ersten Raststellung die Rastarme (10) spreizbar sind, und die Lösesicherung (60) aus einer den Muffenabschnitt (3) umfassenden Hülse (61) besteht, die an ihrer in Einsteckrichtung (Z) weisenden Umfangsrand (62) erste Rastzungen (63) aufweist, die in der jeweiligen Raststellung in erste und zweite Ausnehmungen (65, 30) der Umfangswand des Muffenabschnitts (3) kraftformschlüssig einrasten,
**dadurch gekennzeichnet, dass** die Hülse (61) der Lösesicherung (60) an ihrem entgegen der Einsteckrichtung (Z) weisenden Rand hakenförmige Rastfortsätze (70) aufweist, die in der ersten Raststellung der Lösesicherung (60) in die jeweiligen Rastausnehmungen (30) eingreifen und entgegen der Einsteckrichtung (Z) formschlüssig fixiert sind, sowie die zweiten Rastnocken (29c) der Formschlusselemente (29) derart einen in Richtung auf die Längsachse (X-X) weisenden Betätigungsansatz (71) aufweisen, dass bedingt durch das Einstecken des Gegensteckverbinders (14) in die Adapterhülse (7) die zweiten Rastnocken (29c) um ein Verschiebemaß (d) innerhalb der jeweiligen Rastausnehmung (30) derart verschiebbar sind, dass die zweiten Rastnocken (29c) mit ihren freien Enden in der Öffnungsebene einer außenseitigen Öffnung der jeweiligen Rastausnehmung (30) liegen, wodurch der hakenförmige Rastfortsatz (70) aus seiner formschlüssigen Raststellung gelöst wird.

2. Steckverbinder (1) nach Anspruch 1,
**dadurch gekennzeichnet, dass** die hakenförmigen Rastfortsätze (70) jeweils um 90 ° gegenüber den Rastzungen (63) versetzt sind und diametral zueinander gegenüberliegen.

3. Steckverbinder (1) nach Anspruch 1 oder 2,
**dadurch gekennzeichnet, dass** die Wandung der Hülse (61) der Lösesicherung (60) im Bereich der hakenförmigen Rastfortsätze (70) eine derartige Höhe besitzt, dass in der zweiten Raststellung der Lösesicherung (60) die hakenförmigen freien Enden der Rastfortsätze (70) in einem Spalt (32a) zwischen dem Ringkragen (15) und dem Muffenteil (3) eingreifen.

4. Steckverbinder (101) zum Verbinden von mindestens einer Fluidleitung mit einer anderen Fluidleitung oder einem Aggregatanschluss, umfassend ein Gehäuse (102) mit einem Durchgangskanal (105), wobei ein Ende des Gehäuses (102) als Muffenabschnitt (103) zum Einstecken eines Gegensteckverbinders (114) ausgebildet ist, und Rastmittel (110, 112) zum lösbaren Fixieren des Gegensteckverbinders (114) aufweist, wobei die Rastmittel (110, 112) Bestandteil einer in den Muffenabschnitt (103) steckbaren Adapterhülse (107) sind, die im Muffenabschnitt (103) mittels radial elastischer Formschlusselemente (129) gehalten ist, und eine Durchgangsöffnung (108) für einen Steckerschaft (114a) des Gegensteckverbinders (114) aufweist, sowie die Rastmittel (110, 112) aus mindestens zwei in Bezug auf eine Längsmittelachse (X-X) des Steckverbinders (101) radial elastischen ersten Rastarmen (110) gebildet sind, und die ersten Rastarme (110) an ihren freien Enden radial in Richtung auf die Längsmittelachse (X-X) verlaufende erste Rastnocken (112) aufweisen, wobei die Formschlusselemente (129) aus am äußeren Umfang der Adapterhülse (107) zwischen den ersten Rastarmen (110) ausgebildeten und jeweils parallel zur Längsmittelachse (X-X) verlaufenden, radial elastisch verbiegbaren Armen (129a) gebildet sind, die diametral gegenüberliegen und an ihren freien, in Einsteckrichtung (Z) weisenden Enden nach außen abstehende zweite Rastnocken (129c) aufweisen, wobei die Formschlusselemente (129) in ihrem in den Muffenabschnitt (103) eingesteckten Zustand mit den zweiten Rastnocken (129c) in Rastausnehmungen (130) in der Umfangswand des Muffenabschnitts (103) formschlüssig rastend eingreifen, und am Außenumfang des Muffenabschnitts (103) eine Lösesicherung (160) in Richtung der Längsmittelachse (X-X) zwischen zwei Raststellungen verschiebbar angeordnet ist, wobei die Lösesicherung (160) in ihrer auf einem Ringkragen (115) der Adapterhülse (107) verschobenen zweiten Raststellung eine Spreizung der Rastarme (110) verhindert und in ihrer anderen ersten Raststellung die Rastarme (110) spreizbar sind, und die Lösesicherung (160) aus einer den Muffenabschnitt (103) umfassenden Hülse (161) besteht,
**dadurch gekennzeichnet, dass** die Hülse (161) der Lösesicherung (160) an ihrem in Einsteckrichtung (Z) weisenden Umfangsrand ein geschlossenes Ringprofil aufweist und an ihrem entgegen der Einsteckrichtung (Z) weisenden Rand hakenförmige Rastfortsätze (170) aufweist, und die Wandung der Hülse (161) der Lösesicherung (160) im Bereich der hakenförmigen Rastfortsätze (170) eine derartige Höhe besitzt, dass in der zweiten Raststellung der Lösesicherung (160) die hakenförmigen freien Enden der Rastfortsätze (170) in einem Spalt (132a) zwischen dem Ringkragen (115) und dem Muffenteil (103) eingreifen und in der ersten Raststellung der Lösesicherung (160) selbige in die jeweiligen Rastausnehmungen (130) eingreifen und entgegen der Einsteckrichtung (Z) formschlüssig fixiert sind, sowie die zweiten Rastnocken (129c) der Formschlusselemente (129) derart einen in Richtung auf die Längsachse (X-X) weisenden Betätigungsansatz (171) aufweisen, dass bedingt durch das Einstecken des Gegensteckverbinders (114) in die Adapterhülse (107) die zweiten Rastnocken (129c) um ein Verschiebemaß (d) innerhalb der jeweiligen Rastausnehmung (130) derart verschiebbar sind, dass die zweiten Rastnocken (129c) mit ihren freien Enden in der Öffnungsebene einer außenseitigen Öffnung der jeweiligen Rastausnehmung (130) liegen, wodurch der hakenförmige Rastfortsatz (170) aus seiner formschlüssigen Raststellung gelöst wird.

5. Steckverbinder (1, 101) nach einem der Ansprüche 1 bis 4,
**dadurch gekennzeichnet, dass** die Höhe des Betätigungsansatzes (71, 171) gleich dem Verschiebemaß (d) ist, und der Betätigungsansatz (71, 171) eine in Richtung auf die Längsachse (X-X) weisende, endseitige Schrägfläche aufweist, die zur Anlage an dem Gegensteckverbinder (14, 114) beim Einstecken desselben kommt.

6. Steckverbinder (1, 101) nach einem der Ansprüche 1 bis 5,
**dadurch gekennzeichnet, dass** Abstütznocken (29f, 129f) gegenüber den Betätigungsansätzen (71, 171) entgegen der Einsteckrichtung (Z) versetzt angeordnet an den Armen (29a, 129a) der Rastmittel (29, 129) ausgebildet sind, deren in Richtung auf die Wandung des Muffenteils (3, 103) weisenden Endflächen von der Wandung mindestens um das Verschiebemaß (d) entfernt sind.

7. Steckverbinder (1, 101) nach einem der Ansprüche 1 bis 6,
**dadurch gekennzeichnet, dass** die ersten Rastnocken (12, 112) einen radialen Abstand zur Längsmittelachse (X-X) aufweisen, der kleiner ist als ein Innenradius der Durchgangsöffnung (8, 108) sowie in einem radialen Abstand der Rastarme in Bezug auf die Längsmittelachse (X-X) zumindest in einem an die ersten Rastnocken (12, 112) angrenzenden Bereich gleich dem Innendurchmesser der Durchgangsöffnung (8, 108) oder kleiner als der Innendurchmesser der Durchgangsöffnung (8, 108) ist.

8. Steckverbinder (1, 101) nach einem der Ansprüche 1 bis 7,
**dadurch gekennzeichnet, dass** die Formschlusselemente (29, 129) in Umfangsrichtung der Adapterhülse (7, 107) formschlüssig in den Ausnehmungen (30, 130) fixiert sind, wobei insbesondere vier um 90° zueinander versetzte Ausnehmungen (30, 130) ausgebildet sind.

9. Steckverbinder (1, 101) nach einem der Ansprüche 1 bis 8,
**dadurch gekennzeichnet, dass** die Adapterhülse (7, 107) einen am Umfang ihrer Durchgangsöffnung (8, 108) an ihrem in Einsteckrichtung (Z) gesehen hinteren Öffnungsrand verlaufenden Ringkragen (15, 15a, 115) aufweist, der im eingesteckten Zustand der Adapterhülse (7, 107) außerhalb des Muffenabschnitts (3, 103) angeordnet ist, und die Rastnocken (12, 112) ebenfalls außerhalb des Muffenabschnitts (3, 103) verlaufen.

10. Steckverbinder (1, 101) nach Anspruch 9,
**dadurch gekennzeichnet, dass** der Ringkragen (15) kreisförmig ist und sein Außendurchmesser gleich groß ist wie ein Außendurchmesser einer kreisförmigen Umfangskontur des Muffenabschnitts (3).

11. Steckverbinder (1, 101) nach einem der Ansprüche 1 bis 10,
**dadurch gekennzeichnet, dass** die Rastarme (29a, 129a) durch eine U-förmigen Schlitz (29b, 129b) von der Wandung der Adapterhülse (7, 107) getrennt sind und mit der Wandung der Adapterhülse (7, 107) mit ihrem entgegen der Einsteckrichtung (Z) weisenden Ende einstückig verbunden sind.

12. Steckverbinder (1, 101) nach einem der Ansprüche 1 bis 11,
**dadurch gekennzeichnet, dass** die Rastnocken (29c, 129c) jeweils eine in Einsteckrichtung ((Z)) weisende Schrägfläche (29d, 129) und eine entgegen der Einsteckrichtung (Z) weisende, senkrecht zur Längsmittelachse (X-X) verlaufende Rastfläche (29e, 129e) aufweisen.

13. Steckverbinder (1, 101) nach einem der Ansprüche 1 bis 12,
**dadurch gekennzeichnet, dass** die Rastnocken (29c, 129c) mit ihren freien Enden auf einem Umfangskreis liegen, dessen Durchmesser kleiner ist als der Außendurchmesser des Muffenabschnitts (3, 103) und größer ist als der Innendurchmesser des Kanalabschnitts (6, 106) des Muffenabschnitts (3, 103).

14. Steckverbinder (1, 101) nach einem der Ansprüche 1 bis 13,
**dadurch gekennzeichnet, dass** die Rastarme (10, 110) im Bereich der Rastnocken (12, 112) mit dem Ringkragen (15, 15a, 115) verbunden sind und im übrigen Umfangsbereich durch einen umfangsgemäßen Spaltabschnitt (32, 132) von dem Ringkragen (15, 15a, 115) getrennt sind.

15. Steckverbinder (1, 101) nach einem der Ansprüche 1 bis 14,
**dadurch gekennzeichnet, dass** die Hülse (61, 161) der Lösesicherung (60, 160) in ihrer die Spreizung der Rastarme (10, 110) blockierenden Raststellung den Ringkragen (15, 15a, 115) umfasst.

16. Steckverbinder (1, 101) nach Anspruch 15,
**dadurch gekennzeichnet, dass** die Hülse (61, 161) Einbuchtungen (66, 166) aufweist, die einen Freiraum für Ausbuchtungen des Betätigungsabschnitts (33, 133) des Ringkragens (15, 15a, 115) bilden, die im teilgesteckten Zustand des Gegensteckverbinders (14, 114) ausgebildet sind und vorzugsweise eine ovale Form besitzen, und eine Verschiebung der Hülse (61, 161) nach dem Lösen der hakenförmigen Rastfortsätze (70, 170) aus ihrer formschlüssigen Raststellung über den Ringkragen (15, 15a, 115) verhindern und erst nach vollständigem Einstecken des Gegensteckverbinders (14, 114), wodurch der Ringkragen (15, 15a, 115) seine ursprüngliche Kreisform wieder einnimmt, die Hülse (61, 161) über den Ringkragen (15, 15a, 115) in ihre zweite Raststellung verschoben werden kann.

17. Steckverbinder (1, 101) nach einem der Ansprüche 1 bis 16,
**dadurch gekennzeichnet, dass** die Hülse (61, 161) der Lösesicherung (60, 160) Lagertaschen (172) aufweist, welche entgegen der Einsteckrichtung (Z) und radial zur Längsachse (X-X) weisend geöffnet ausgebildet sind, wobei die Lagertaschen (172) jeweils eine entgegen der Einsteckrichtung (Z) weisende Anschlagsfläche (174) aufweisen, welche in der zweiten Raststellung an einer korrespondierend ausgebildeten Gegenanschlagsfläche (176) der Adapterhülse (7, 107) anliegt und formschlüssig eine Verschiebung der Hülse (61, 161) entgegen der Einsteckrichtung (Z) blockiert.

18. Steckverbinder (1) nach Anspruch 17,
**dadurch gekennzeichnet, dass** die Gegenanschlagfläche (176) am Ringkragen (15, 15a, 115) ausgebildet ist und axial in Einsteckrichtung (Z) weisend hinter den Rastmitteln (10, 12, 110, 112) angeordnet ist.

19. Steckverbinder (1) nach einem der Ansprüche 1 bis 18,
**dadurch gekennzeichnet, dass** die Hülse (61, 161) der Lösesicherung (60, 160) im Bereich der hakenförmigen Rastfortsätze (70, 170) am Außenumfang eine Materialverstärkung (178) aufweist, welche insbesondere die Steifigkeit- und Robustheit der Hülse (61, 161) im Bereich der hakenförmigen Rastfortsätze (70, 171) erhöht.

20. Steckverbinder (1) nach Anspruch 19,
**dadurch gekennzeichnet, dass** die Materialverstärkung (178) radial zur Längsachse (X-X) außenliegend zumindest teilweise die hakenförmigen Rastfortsätze (70, 170) umfasst.

## Claims

1. Connector (1) for connecting at least one fluid line to another fluid line or to an assembly connection, comprising a housing (2) with a through channel (5), one end of the housing (2) being designed as a sleeve section (3) for inserting a mating connector (14), and having latching means (10, 12) for releasably fixing the mating connector (14), the latching means (10, 12) being a component of an adapter sleeve (7) which can be plugged into the sleeve section (3) and is held in the sleeve section (3) by means of radially elastic positive locking elements (29) and has a through-opening (8) for a plug shank (14a) of the mating connector (14), and the latching means (10, 12) are formed from at least two first latching arms (10) which are radially elastic in relation to a longitudinal center axis (X-X) of the connector (1) and the first latching arms (10) have at their free ends first latching cams (12) extending radially in the direction of the longitudinal center axis (X-X), wherein the positive locking elements (29) are formed from radially elastically bendable arms (29a) formed on the outer circumference of the adapter sleeve (7) between the first latching arms (10) and each extend parallel to the longitudinal center axis (X-X), which lie diametrically opposite one another and have second latching cams (29c) at their free ends pointing in the insertion direction (Z), which project outwards, wherein the positive locking elements (29), in their inserted state into the sleeve section (3), engage in a positively locking manner with the second locking cams (29c) in locking recesses (30) in the circumferential wall of the sleeve section (3), and a release lock (60) is arranged on the outer circumference of the sleeve section (3) so as to be displaceable in the direction of the longitudinal center axis (X-X) between two latching positions, wherein the release lock (60) in its second latching position displaced on an annular collar (15) of the adapter sleeve (7) prevents spreading of the latching arms (10) and in its other first latching position the latching arms (10) can be spread, and the release lock (60) consists of a sleeve (61) which surrounds the sleeve section (3), which has, on its circumferential edge (62) pointing in the insertion direction (Z), first latching tongues (63) which, in the respective latching position, latch into first and second recesses (65, 30) in the circumferential wall of the sleeve section (3) in a force-locking manner,
**characterized in that** the sleeve (61) of the release lock (60) has hook-shaped latching extensions (70) on its edge pointing in the direction opposite to the insertion direction (Z), which, in the first latching position of the release lock (60), engage in the respective latching recesses (30) and are fixed in a form-fitting manner counter to the insertion direction (Z), and the second latching cams (29c) of the positive locking elements (29) in such a way have an actuating projection (71) pointing in the direction of the longitudinal axis (X-X), **in that**, as a result of the mating connector (14) being inserted into the adapter sleeve (7), the second latching cams (29c) can be displaced by a displacement dimension (d) within the respective latching recess (30) in such a way that the second latching cams (29c) lie with their free ends in the opening plane of an outside opening of the respective latching recess (30), as a result of which the hook-shaped latching extension (70) is released from its positively locking latching position.

2. Connector (1) according to claim 1,
**characterized in that** the hook-shaped latching extensions (70) are each offset by 90° relative to the latching tongues (63) and lie diametrically opposite one another.

3. Connector (1) according to claim 1 or 2,
**characterized in that** the wall of the sleeve (61) of the release lock (60) has such a height in the region of the hook-shaped latching extensions (70) that in the second latching position of the release lock (60) the hook-shaped free ends of the latching extensions (70) engage in a gap (32a) between the annular collar (15) and the sleeve section (3).

4. Connector (101) for connecting at least one fluid line to another fluid line or to an assembly connection, comprising a housing (102) with a through channel (105), one end of the housing (102) being designed as a sleeve section (103) for the insertion of a mating connector (114), and having latching means (110, 112) for the releasable fixing of the mating connector (114), the latching means (110, 112) being part of an adapter sleeve (107) which can be plugged into the sleeve section (103), which is held in the sleeve section (103) by means of radially elastic positive locking elements (129) and has a through-opening (108) for a plug shank (114a) of the mating connector (114), and the latching means (110, 112) are formed from at least two first latching arms (110) which are radially elastic with respect to a longitudinal center axis (X-X) of the connector (101), and the first latching arms (110) have first latching cams (112) which run radially in the direction of the longitudinal center axis (X-X) at their free ends, wherein the positive locking elements (129) are formed from radially elastically bendable arms (129a) which are formed on the outer circumference of the adapter sleeve (107) between the first latching arms (110) and each extend parallel to the longitudinal center axis (X-X), which lie diametrically opposite one another and have second latching cams (129c) at their free ends pointing in the insertion direction (Z), which project outwards, wherein the positive-locking elements (129), in their inserted state into the sleeve section (103), engaging with the second locking cams (129c) in a positively locking manner in locking recesses (130) in the circumferential wall of the sleeve section (103), and a release lock (160) is arranged on the outer circumference of the sleeve section (103) so as to be displaceable in the direction of the longitudinal center axis (X-X) between two latching positions, wherein the release lock (160), in its second latching position displaced on an annular collar (115) of the adapter sleeve (107) prevents spreading of the latching arms (110) and in its other first latching position, the latching arms (110) can be spread, and the release lock (160) consists of a sleeve (161) which surrounds the sleeve section (103),
**characterized in that** the sleeve (161) of the release lock (160) has a closed annular profile at its circumferential edge pointing in the insertion direction (Z) and has hook-shaped latching extensions (170) at its edge pointing counter to the insertion direction (Z), and the wall of the sleeve (161) of the release lock (160) has such a height in the region of the hook-shaped latching extensions (170), that in the second latching position of the release lock (160) the hook-shaped free ends of the detent extensions (170) engage in a gap (132a) between the annular collar (115) and the sleeve section (103) and in the first latching position of the release lock (160) the same engage in the respective latching recesses (130) and are positively fixed against the insertion direction (Z), and the second latching cams (129c) of the positive locking elements (129) have an actuating projection (171) pointing in the direction of the longitudinal axis (X-X) in such a way that, as a result of the mating connector (114) being inserted into the adapter sleeve (107), the second latching cams (129c) can be displaced by a displacement dimension (d) within the respective latching recess (130) in such a way that the second latching cams (129c) lie with their free ends in the opening plane of an outside opening of the respective latching recess (130), as a result of which the hook-shaped latching extension (170) is released from its positively locking latching position.

5. Connector (1, 101) according to any one of claims 1 to 4,
**characterized in that** the height of the actuating projection (71, 171) is equal to the displacement dimension (d), and the actuating projection (71, 171) has an end-side sloping surface pointing in the direction of the longitudinal axis (X-X), which comes to bear against the mating connector (14, 114) when the latter is inserted.

6. Connector (1, 101) according to any one of claims 1 to 5,
**characterized in that** supporting cams (29f, 129f) are formed on the arms (29a, 129a) of the latching means (29, 129) in an offset manner with respect to the actuating lugs (71, 171) and in the opposite direction to the insertion direction (Z), the end surfaces of the latching means (29, 129), which end surfaces point in the direction of the wall of the sleeve section (3, 103), being distanced from the wall by at least the displacement dimension (d).

7. Connector (1, 101) according to any one of claims 1 to 6,
**characterized in that** the first latching cams (12, 112) have a radial distance from the longitudinal center axis (X-X) which is smaller than an inner radius of the through-opening (8, 108) and in a radial distance of the latching arms with respect to the longitudinal center axis (X-X) is equal to the inner diameter of the through-opening (8, 108) or smaller than the inner diameter of the through-opening (8, 108) at least in a region adjacent to the first latching cams (12, 112).

8. Connector (1, 101) according to any one of claims 1 to 7,
**characterized in that** the positive-locking elements (29, 129) are positively fixed in the recesses (30, 130) in the circumferential direction of the adapter sleeve (7, 107), wherein in particular four recesses (30, 130) are formed which are offset by 90° relative to one another.

9. Connector (1, 101) according to one of claims 1 to 8,
**characterized in that** the adapter sleeve (7, 107) has an annular collar (15, 15a, 115) which extends on the periphery of its through-opening (8, 108) at its rear opening edge as viewed in the insertion direction (Z) and which, in the inserted state of the adapter sleeve (7, 107), is arranged outside the sleeve section (3, 103), and the latching cams (12, 112) likewise extend outside the sleeve section (3, 103).

10. Connector (1, 101) according to claim 9,
**characterized in that** the annular collar (15) is circular and its outer diameter is equal to an outer diameter of a circular peripheral contour of the sleeve section (3).

11. Connector (1, 101) according to any one of claims 1 to 10,
**characterized in that** the latch arms (29a, 129a) are separated from the wall of the adapter sleeve (7, 107) by a U-shaped slot (29b, 129b) and are integrally connected to the wall of the adapter sleeve (7, 107) with their end facing opposite to the insertion direction (Z).

12. Connector (1, 101) according to one of the claims 1 to 11,
**characterized in that** the latching cams (29c, 129c) each have an inclined surface (29d, 129) facing in the insertion direction (Z) and a latching surface (29e, 129e) facing against the insertion direction (Z) and extending perpendicularly to the longitudinal center axis (X-X).

13. Connector (1, 101) according to one of the claims 1 to 12,
**characterized in that** the latching cams (29c, 129c) lie with their free ends on a circumferential circle, the diameter of which is smaller than the outer diameter of the sleeve section (3, 103) and larger than the inner diameter of the channel section (6, 106) of the sleeve section (3, 103).

14. Connector (1, 101) according to any one of claims 1 to 13,
**characterized in that** the latching arms (10, 110) are connected to the annular collar (15, 15a, 115) in the region of the latching cams (12, 112) and are separated from the annular collar (15, 15a, 115) in the remaining circumferential region by a circumferential gap section (32, 132).

15. Connector (1, 101) according to any one of claims 1 to 14,
**characterized in that** the sleeve (61, 161) of the release lock (60, 160) in its latching position blocking the spreading of the latching arms (10, 110) surrounds the annular collar (15, 15a, 115).

16. Connector (1, 101) according to claim 15,
**characterized in that** the sleeve (61, 161) has indentations (66, 166) which form a free space for protrusions of the actuating section (33, 133) of the annular collar (15, 15a, 115), which are formed in the partially inserted state of the mating connector (14, 114) and preferably have an oval shape, and prevent displacement of the sleeve (61, 161) after release of the hook-shaped latching extensions (70, 170) from their positive locking position via the annular collar (15, 15a, 115) and only after the mating connector (14, 114) has been fully inserted, whereby the annular collar (15, 15a, 115) resumes its original circular shape, can the sleeve (61, 161) be displaced via the annular collar (15, 15a, 115) into its second latching position.

17. Connector (1, 101) according to any one of claims 1 to 16,
**characterized in that** the sleeve (61, 161) of the release lock (60, 160) has bearing pockets (172) which are designed to be open in the opposite direction to the insertion direction (Z) and radially with respect to the longitudinal axis (X-X), the bearing pockets (172) each having a stop surface (174) which points in the opposite direction to the insertion direction (Z), which, in the second latching position, rests against a correspondingly formed counter stop surface (176) of the adapter sleeve (7, 107) and positively blocks a displacement of the sleeve (61, 161) counter to the insertion direction (Z).

18. Connector (1) according to claim 17,
**characterized in that** the counter stop surface (176) is formed on the annular collar (15, 15a, 115) and is arranged axially facing in the insertion direction (Z) behind the latching means (10, 12, 110, 112).

19. Connector (1) according to one of claims 1 to 18,
**characterized in that** the sleeve (61, 161) of the release lock (60, 160) has a material reinforcement (178) on the outer circumference in the region of the hook-shaped latching extensions (70, 170), which material reinforcement (178) increases in particular the rigidity and robustness of the sleeve (61, 161) in the region of the hook-shaped latching extensions (70, 171).

20. Connector (1) according to claim 19,
**characterized in that** the material reinforcement (178) radially outwardly of the longitudinal axis (X-X) at least partially comprises the hook-shaped latching extensions (70, 170).

## Revendications

1. Connecteur enfichable (1) pour relier au moins une conduite de fluide à une autre conduite de fluide ou à un raccord de groupe, comprenant un boîtier (2) avec un canal de passage (5), une extrémité du boîtier (2) étant réalisée sous forme de section de manchon (3) pour enficher un connecteur enfichable complémentaire (14), et présentant des moyens d'encliquetage (10, 12) pour fixer de manière amovible le connecteur enfichable complémentaire (14), les moyens d'encliquetage (10, 12) étant des constituants d'une douille adaptatrice (7) pouvant être enfichée dans la section de manchon (3), qui est maintenue dans la section de manchon (3) au moyen d'éléments à complémentarité de forme (29) radialement élastiques, et qui présente une ouverture de passage (8) pour une tige de fiche (14a) du connecteur enfichable complémentaire (14), et les moyens d'encliquetage (10, 12) étant formés d'au moins deux premiers bras d'encliquetage (10) radialement élastiques par rapport à un axe médian longitudinal (X-X) du connecteur enfichable (1), et les premiers bras d'encliquetage (10) présentant à leurs extrémités libres des premières cames d'encliquetage (12) s'étendant radialement en direction de l'axe médian longitudinal (X-X), les éléments à complémentarité de forme (29) étant formés de bras (29a) déformables radialement élastiquement, réalisés sur la périphérie extérieure de la douille adaptatrice (7) entre les premiers bras d'encliquetage (10) et s'étendant respectivement parallèlement à l'axe médian longitudinal (X-X), qui sont diamétralement opposés et présentent à leurs extrémités libres, orientées dans la direction d'enfichage (Z), des deuxièmes cames d'encliquetage (29c) faisant saillie vers l'extérieur, les éléments à complémentarité de forme (29) s'engageant, à leur état enfiché dans la section de manchon (3), avec les deuxièmes cames d'encliquetage (29c) dans des évidements d'encliquetage (30) dans la paroi périphérique de la section de manchon (3), en s'encliquetant par complémentarité de forme, et une sécurité contre le détachement (60) étant agencée sur la périphérie extérieure de la section de manchon (3) de manière à pouvoir être déplacée entre deux positions d'encliquetage en direction de l'axe médian longitudinal (X-X), la sécurité contre le détachement (60) empêchant un écartement des bras d'encliquetage (10) dans sa deuxième position d'encliquetage déplacée sur un collet annulaire (15) de la douille adaptatrice (7) et les bras d'encliquetage (10) pouvant être écartés dans son autre première position d'encliquetage, et la sécurité contre le détachement (60) étant constituée d'une douille (61) entourant la section de manchon (3), qui présente, sur son bord périphérique (62) orienté dans la direction d'enfichage (Z), des premières languettes d'encliquetage (63) qui, dans la position d'encliquetage respective, s'encliquètent par adhérence dans des premiers et deuxièmes évidements (65, 30) de la paroi périphérique de la section de manchon (3),
**caractérisé en ce que** la douille (61) de la sécurité contre le détachement (60) présente, sur son bord orienté à l'encontre de la direction d'enfichage (Z), des prolongements d'encliquetage (70) en forme de crochets, qui, dans la première position d'encliquetage de la sécurité contre le détachement (60), s'engagent dans les évidements d'encliquetage respectifs (30) et sont fixés par complémentarité de forme à l'encontre de la direction d'enfichage (Z), et les deuxièmes cames d'encliquetage (29c) des éléments à complémentarité de forme (29) présentent un épaulement d'actionnement (71) orienté en direction de l'axe longitudinal (X-X), de telle sorte qu'en raison de l'enfichage du connecteur enfichable complémentaire (14) dans la douille adaptatrice (7), les deuxièmes cames d'encliquetage (29c) peuvent être déplacées d'une distance de déplacement (d) à l'intérieur de l'évidement d'encliquetage respectif (30) de telle sorte que les deuxièmes cames d'encliquetage (29c) se situent avec leurs extrémités libres dans le plan d'ouverture d'une ouverture côté extérieur de l'évidement d'encliquetage respectif (30), moyennant quoi le prolongement d'encliquetage (70) en forme de crochet est détaché de sa position d'encliquetage par complémentarité de forme.

2. Connecteur enfichable (1) selon la revendication 1, **caractérisé en ce que** les prolongements d'encliquetage (70) en forme de crochet sont respectivement décalés de 90° par rapport aux languettes d'encliquetage (63) et sont diamétralement opposés les uns aux autres.

3. Connecteur enfichable (1) selon la revendication 1 ou 2,
**caractérisé en ce que** la paroi de la douille (61) de la sécurité contre le détachement (60) possède, dans la zone des prolongements d'encliquetage (70) en forme de crochets, une hauteur telle que, dans la deuxième position d'encliquetage de la sécurité contre le détachement (60), les extrémités libres en forme de crochets des prolongements d'encliquetage (70) s'engagent dans une fente (32a) entre le collet annulaire (15) et la section de manchon (3).

4. Connecteur enfichable (101) pour relier au moins une conduite de fluide à une autre conduite de fluide ou à un raccord de groupe, comprenant un boîtier (102) avec un canal de passage (105), une extrémité du boîtier (102) étant réalisée sous forme de section de manchon (103) pour enficher un connecteur enfichable complémentaire (114), et présentant des moyens d'encliquetage (110, 112) pour fixer de manière amovible le connecteur enfichable complémentaire (114), les moyens d'encliquetage (110, 112) étant des constituants d'une douille adaptatrice (107) pouvant être enfichée dans la section de manchon (103), qui est maintenue dans la section de manchon (103) au moyen d'éléments à complémentarité de forme (129) radialement élastiques, et présentant une ouverture de passage (108) pour une tige de fiche (114a) du connecteur enfichable complémentaire (114), et les moyens d'encliquetage (110, 112) étant formés d'au moins deux premiers bras d'encliquetage (110) radialement élastiques par rapport à un axe médian longitudinal (X-X) du connecteur enfichable (101), et les premiers bras d'encliquetage (110) présentant à leurs extrémités libres des premières cames d'encliquetage (112) s'étendant radialement en direction de l'axe médian longitudinal (X-X), les éléments à complémentarité de forme (129) étant formés par des bras (129a) déformables radialement élastiquement, réalisés sur la périphérie extérieure de la douille adaptatrice (107) entre les premiers bras d'encliquetage (110) et s'étendant respectivement parallèlement à l'axe médian longitudinal (X-X), qui sont diamétralement opposés et qui présentent à leurs extrémités libres orientée dans la direction d'enfichage (Z) des deuxièmes cames d'encliquetage (129c) faisant saillie vers l'extérieur, les éléments à complémentarité de forme (129) s'engageant, à leur état enfiché dans la section de manchon (103), avec les deuxièmes cames d'encliquetage (129c) dans des évidements d'encliquetage (130) dans la paroi périphérique de la section de manchon (103), en s'encliquetant par complémentarité de forme, et une sécurité contre le détachement (160) étant agencée sur la périphérie extérieure de la section de manchon (103) de manière à pouvoir être déplacée entre deux positions d'encliquetage en direction de l'axe médian longitudinal (X-X), la sécurité contre le détachement (160) empêchant un écartement des bras d'encliquetage (110) dans sa deuxième position d'encliquetage déplacée sur un collet annulaire (115) de la douille adaptatrice (107) et les bras d'encliquetage (110) pouvant être écartés dans son autre première position d'encliquetage, et la sécurité contre le détachement (160) étant constituée d'une douille (161) entourant la section de manchon (103),
**caractérisé en ce que** la douille (161) de la sécurité contre le détachement (160) présente un profil annulaire fermé sur son bord périphérique orienté dans la direction d'enfichage (Z) et des prolongements d'encliquetage (170) en forme de crochets sur son bord orienté à l'encontre de la direction d'enfichage (Z), et la paroi de la douille (161) de la sécurité contre le détachement (160) possède dans la zone des prolongements d'encliquetage (170) en forme de crochets une hauteur telle que, dans la deuxième position d'encliquetage de la sécurité contre le détachement (160), les extrémités libres en forme de crochets des prolongements d'encliquetage (170) s'engagent dans une fente (132a) entre le collet annulaire (115) et la section de manchon (103) et, dans la première position d'encliquetage de la sécurité contre le détachement (160), celles-ci s'engagent dans les évidements d'encliquetage respectifs (130) et sont fixées par complémentarité de forme à l'encontre de la direction d'enfichage (Z), et les deuxièmes cames d'encliquetage (129c) des éléments à complémentarité de forme (129) présentent un épaulement d'actionnement (171) orienté en direction de l'axe longitudinal (X-X), de telle sorte qu'en raison de l'enfichage du connecteur enfichable complémentaire (114) dans la douille adaptatrice (107), les deuxièmes cames d'encliquetage (129c) peuvent être déplacées d'une distance de déplacement (d) à l'intérieur de l'évidement d'encliquetage respectif (130) de telle sorte que les deuxièmes cames d'encliquetage (129c) se situent avec leurs extrémités libres dans le plan d'ouverture d'une ouverture côté extérieur de l'évidement d'encliquetage respectif (130), moyennant quoi le prolongement d'encliquetage (170) en forme de crochet est détaché de sa position d'encliquetage par complémentarité de forme.

5. Connecteur enfichable (1, 101) selon l'une quelconque des revendications 1 à 4, **caractérisé en ce que** la hauteur de l'épaulement d'actionnement (71, 171) est égale à la distance de déplacement (d), et l'épaulement d'actionnement (71, 171) présente une surface en biais d'extrémité orientée en direction de l'axe longitudinal (X-X), qui vient en appui sur le connecteur enfichable complémentaire (14, 114) lors de l'enfichage de celui-ci.

6. Connecteur enfichable (1, 101) selon l'une quelconque des revendications 1 à 5,
**caractérisé en ce que** des cames de support (29f, 129f) sont réalisées sur les bras (29a, 129a) des moyens d'encliquetage (29, 129), agencées en décalage par rapport aux épaulements d'actionnement (71, 171) à l'encontre de la direction d'enfichage (Z), dont les surfaces d'extrémité orientées en direction de la paroi de la section de manchon (3, 103) sont éloignées de la paroi d'au moins la distance de déplacement (d).

7. Connecteur enfichable (1, 101) selon l'une quelconque des revendications 1 à 6,
**caractérisé en ce que** les premières cames d'encliquetage (12, 112) présentent une distance radiale par rapport à l'axe médian longitudinal (X-X) qui est inférieure à un rayon intérieur de l'ouverture de passage (8, 108) et, à une distance radiale des bras d'encliquetage par rapport à l'axe médian longitudinal (X-X), au moins dans une zone adjacente aux premières cames d'encliquetage (12, 112), est égale au diamètre intérieur de l'ouverture de passage (8, 108) ou inférieure au diamètre intérieur de l'ouverture de passage (8, 108).

8. Connecteur enfichable (1, 101) selon l'une quelconque des revendications 1 à 7,
**caractérisé en ce que** les éléments à complémentarité de forme (29, 129) sont fixés par complémentarité de forme dans les évidements (30, 130) dans la direction périphérique des douilles adaptatrices (7, 107), quatre évidements (30, 130) décalés de 90° les uns par rapport aux autres étant notamment réalisés.

9. Connecteur enfichable (1, 101) selon l'une quelconque des revendications 1 à 8,
**caractérisé en ce que** la douille adaptatrice (7, 107) présente un collet annulaire (15, 15a, 115) s'étendant sur la périphérie de son ouverture de passage (8, 108), sur son bord d'ouverture arrière vu dans la direction d'enfichage (Z) qui, à l'état enfiché de la douille adaptatrice (7, 107), est agencé à l'extérieur de la section de manchon (3, 103), et les cames d'encliquetage (12, 112) s'étendent également à l'extérieur de la section de manchon (3, 103).

10. Connecteur enfichable (1, 101) selon la revendication 9,
**caractérisé en ce que** le collet annulaire (15) est circulaire et son diamètre extérieur est égal à un diamètre extérieur d'un contour périphérique circulaire de la section de manchon (3).

11. Connecteur enfichable (1, 101) selon l'une quelconque des revendications 1 à 10,
**caractérisé en ce que** les bras d'encliquetage (29a, 129a) sont séparés de la paroi de la douille adaptatrice (7, 107) par une fente en forme de U (29b, 129b) et sont reliés d'un seul tenant à la paroi de la douille adaptatrice (7, 107) par leur extrémité orientée à l'encontre de la direction d'enfichage (Z).

12. Connecteur enfichable (1, 101) selon l'une quelconque des revendications 1 à 11,
**caractérisé en ce que** les cames d'encliquetage (29c, 129c) présentent chacune une surface en biais (29d, 129) orientée dans la direction d'enfichage (Z) et une surface d'encliquetage (29e, 129e) orientée à l'encontre de la direction d'enfichage (Z), s'étendant perpendiculairement à l'axe médian longitudinal (X-X).

13. Connecteur enfichable (1, 101) selon l'une quelconque des revendications 1 à 12,
**caractérisé en ce que** les cames d'encliquetage (29c, 129c) se situent avec leurs extrémités libres sur un cercle périphérique dont le diamètre est inférieur au diamètre extérieur de la section de manchon (3, 103) et supérieur au diamètre intérieur de la section de canal (6, 106) de la section de manchon (3, 103).

14. Connecteur enfichable (1, 101) selon l'une quelconque des revendications 1 à 13,
**caractérisé en ce que** les bras d'encliquetage (10, 110) sont reliés au collet annulaire (15, 15a, 115) dans la zone des cames d'encliquetage (12, 112) et sont séparés du collet annulaire (15, 15a, 115) dans le reste de la zone périphérique par une section de fente (32, 132) de dimension périphérique.

15. Connecteur enfichable (1, 101) selon l'une quelconque des revendications 1 à 14,
**caractérisé en ce que** la douille (61, 161) de la sécurité contre le détachement (60, 160) entoure le collet annulaire (15, 15a, 115) dans sa position d'encliquetage bloquant l'écartement des bras d'encliquetage (10, 110).

16. Connecteur enfichable (1, 101) selon la revendication 15,
**caractérisé en ce que** la douille (61, 161) présente des renfoncements (66, 166) qui forment un espace libre pour des renflements de la section d'actionnement (33, 133) du collet annulaire (15, 15a, 115), qui sont réalisés à l'état partiellement enfiché du connecteur enfichable complémentaire (14, 114) et possèdent de préférence une forme ovale, et empêchent un déplacement de la douille (61, 161) après le détachement des prolongements d'encliquetage en forme de crochets (70, 170) de leur position d'encliquetage par complémentarité de forme sur le collet annulaire (15, 15a, 115) et ce n'est qu'après l'enfichage complet du connecteur enfichable complémentaire (14, 114), moyennant quoi le collet annulaire (15, 15a, 115) reprend sa forme circulaire initiale, que la douille (61, 161) peut être déplacée sur le collet annulaire (15, 15a, 115) dans sa deuxième position d'encliquetage.

17. Connecteur enfichable (1, 101) selon l'une quelconque des revendications 1 à 16,
**caractérisé en ce que** la douille (61, 161) de la sécurité contre le détachement (60, 160) présente des poches de palier (172) qui sont réalisées sous forme ouverte à l'encontre de la direction d'enfichage (Z) et radialement vers l'axe longitudinal (X-X), les poches de palier (172) présentant chacune une surface de butée (174) orientée à l'encontre de la direction d'enfichage (Z), qui, dans la deuxième position d'encliquetage, s'applique contre une surface de butée complémentaire (176) de forme correspondante des douilles adaptatrices (7, 107) et bloque par complémentarité de forme un déplacement de la douille (61, 161) à l'encontre de la direction d'enfichage (Z).

18. Connecteur enfichable (1) selon la revendication 17, **caractérisé en ce que** la surface de butée complémentaire (176) est réalisée sur le collet annulaire (15, 15a, 115) et est agencée derrière les moyens d'encliquetage (10, 12, 110, 112) en étant orientée axialement dans la direction d'enfichage (Z).

19. Connecteur enfichable (1) selon l'une quelconque des revendications 1 à 18,
**caractérisé en ce que** la douille (61, 161) de la sécurité contre le détachement (60, 160) présente, dans la zone des prolongements d'encliquetage (70, 170) en forme de crochets, sur la périphérie extérieure, un renforcement de matériau (178) qui augmente notamment la rigidité et la robustesse de la douille (61, 161) dans la zone des prolongements d'encliquetage (70, 171) en forme de crochets.

20. Connecteur enfichable (1) selon la revendication 19, **caractérisé en ce que** le renforcement de matériau (178), situé à l'extérieur radialement par rapport à l'axe longitudinal (X-X), comprend au moins partiellement les prolongements d'encliquetage (70, 170) en forme de crochets.
